# EUROPEAN PATENT SPECIFICATION

(11) **EP 3 045 606 B1**
(45) Date of publication and mention of the grant of the patent: **06.06.2018**
(21) Application number: 14842622.4
(22) Date of filing: 01.09.2014
(51) Int. Cl.: E04C 5/16, E04G 21/12

(54) **SOCKET FASTENING-TYPE REINFORCING BAR CONNECTOR USING BINDING END MEMBER**
VERSTÄRKUNGSSTREBE ZUR BEFESTIGUNG EINER STECKDOSE MIT BINDUNGSENDELEMENT
RACCORD DE BARRE DE RENFORCEMENT DU TYPE À FIXATION DE DOUILLE UTILISANT UN ÉLÉMENT D'EXTRÉMITÉ DE LIAISON

(30) Priority: 09.09.2013 KR 20130108033
(43) Date of publication of application: 20.07.2016
(73) Proprietor: Kim, Yong-Keun, Namdong-gu, Incheon 405-825 (KR)
(72) Inventor: Kim, Yong-Keun, Namdong-gu, Incheon 405-825 (KR)
(74) Representative: Cabinet Chaillot
(86) International application number: PCT/KR2014/008118
(87) International publication number: WO 2015/034224

(56) References cited:
- WO-A1-2007/061240
- KR-A- 20040 083 355
- KR-A- 20110 096 273
- KR-B1- 100 914 049
- KR-B1- 101 014 543
- KR-Y1- 200 404 177

## Description

### [Technical Field]

The present invention relates to a socket-fastening-type reinforcing bar connector using a binding end member, and more particularly, to a reinforcing bar connector capable of precisely connecting reinforcing bars having adjacent ends mechanically through simple socket fastening by binding end members bound to middle binding members which are bound to the reinforcing members in order to facilitate joining of reinforcing bars that form a foundation of reinforced concrete and joining of reinforcing bar cages.

### [Background Art]

Generally, in a reinforced concrete work using an arrangement of a plurality of reinforcing bars, a footing bar arrangement work of reinforced concrete based on joining of reinforcing bars and reinforcing bar cages is performed using a technical configuration in which binding reinforcing bars are attached to end portions of reinforcing bars or the joining is facilitated by screw processing in order to join the reinforcing bars.

A method of mechanically joining reinforcing bars and adding tension to reinforcing bars is disclosed in Japanese Patent No. 4029342. That is, mechanical reinforcing bar joiners fixed to end portions of adjacent reinforcing bars facing each other and each formed of a head portion including a forward screw and a reverse screw, a coupler coupled to the head portion, and a nut coming in contact with the coupler to fasten the coupler, wherein a forward screw is formed at one end portion of an inner circumferential surface of the coupler and a reverse screw is formed at the other end portion thereof to form screw surfaces corresponding to the screw of the head portion, are disclosed.

However, in the above-mentioned reinforcing bar joiners, a method in which, after the head portions are bound to both end portions of a reinforcing bar, all of the couplers fastened to the head portions bound to both of the end portions are helically coupled to both of the end portions of the reinforcing bars to be joined similarly to a coupling method using a turnbuckle is used. Thus, when a work of connecting a series of main reinforcing bars of upper and lower reinforcing bar cages is performed, main reinforcing bars of the upper reinforcing bar cage entirely come in contact with main reinforcing bars of the lower reinforcing bar cage to be fastened thereto by a screw coupling method using couplers when the reinforcing bar cages are lowered after being hung and lifted from the ground by lifting equipment. However, due to a difficulty of precisely aligning start points and end points of screw threads of end portions of the main reinforcing bars, the fastening work has to be performed strenuously and forcibly by repetitively lifting and placing the upper reinforcing bars, thus causing a problem. That is, since separate fastening works with respect to each of the couplers are possible but a work of aligning screw threads is difficult in the work of fastening reinforcing bar cages which are a prefabricated reinforcing bar network, female screw threads of the couplers to be fastened are formed wider than male screw threads thereof to improve processability of screw coupling, thus causing a wide gap between the fastened screw threads of the couplers and making it impossible for the connection using the couplers to be sturdy. To resolve these problems, inlets are formed at predetermined points near the centers of the couplers and grout filler such as mortar having one fifth to one tenth the stiffness of a metal material are injected into the gaps between the screw threads through the inlets in order to improve the connection strength.

In addition, a reinforcing bar connector using a screw type sleeve is disclosed in Korean Patent No. 10-1014543. That is, a reinforcing bar connector using a screw type sleeve including one sleeve having a female screw portion formed at an inner surface and a male screw portion formed at an outer surface, the other sleeve having a female screw portion formed at an inner surface and a first locking step having one end portion formed of a parallel surface perpendicular to a central axis line formed in the axial direction, a fastening socket having a female screw portion fastened by a screw to the male screw portion of the one sleeve formed at an inner surface and a locking step protruding in a circular central direction formed at an inner surface of one end portion to perform locking while coming in contact with the first locking step of the other sleeve, and a reinforcing bar having a male screw portion formed at an end portion to be fastened by a screw to the female screw portions of the two sleeves is disclosed.

However, in the reinforcing bar connector using a screw type sleeve, a method in which reinforcing bars are joined by couplers after male screw processing is necessarily performed at end portions of the reinforcing bars is used, but problems related to the method of performing the male screw processing at the end portions of the reinforcing bars are appearing, and some developed countries are already regulating and prohibiting the method of joining reinforcing bars by screwing end portions of the reinforcing bars.

In other words, due to an inevitable requirement of highly stiff reinforcing bars in accordance with heightening and earthquake-resistant designs of buildings, the stiffness of conventional reinforcing bars has been gradually strengthened from SD400 to SD600 and even SD800 reinforcing bars are being manufactured and used, and SD600-level reinforcing bars have also been already commercialized domestically.

However, in a process of performing swaging screw processing and inflation screw processing on end portions of highly stiff reinforcing bars, problems in which a texture of reinforcing bars changes and a texture strength of adjacent end portions being annealed declines due to heat occur when a reinforcing bar texture of the end portions is hot-processed, and ductility of the texture declines when the reinforcing bar texture is cold-cut-processed, and in accordance with a problem of cutting a fiber texture of reinforcing bars in accordance with the cutting in screw processing, a screw portion with a relatively declined texture strength with respect to the reinforcing bars is processed, thus causing poor joining.

In addition, when cold forging is performed, stiffness of a surface portion of a cross-sectional surface of a texture of a reinforcing bar is high while stiffness of a central portion thereof declines, thus causing an external stiff texture to be pushed into an inner portion when the cold-processing treatment is performed and causing a great concern of slight crystal breakage. Also, when screw threads are rolled, wear of a rolling roller increases due to highly stiff reinforcing bars, thus causing loss of expenditure by shortening a life of a consumed tool.

Consequently, for the highly stiff reinforcing bars, a special welding method of melting and welding end portions of the highly stiff reinforcing bars is being practically used. This method includes forming a member having stiffness that is the same as or higher than that of the highly stiff reinforcing bars and instantly binding the member to the end portions of the highly stiff reinforcing bars, thus preventing deformation of base material.

Furthermore, with respect to joining reinforcing bars screw-processed in the same direction at both end portions, even in a method of joining the reinforcing bars at both of the end portions by forming screws in the same direction at sleeve-shaped couplers having screw threads formed at inner circumferential surfaces coupled to end portions of the reinforcing bars, there is an inconvenience of having to perform a construction work by rotating the reinforcing bars while the reinforcing bars at both of the end portions abut each other to be joined.

In addition, a socket-fastening-type reinforcing bar connector using a binding end member according to the preamble of claim 1 is disclosed in WO 2007/061240 A1.

### [Disclosure]

### [Technical Problem]

First, a main objective of the present invention is to enable joining of reinforcing bars by integrated coupling with only a simple element by an independent connector that may be bound to an end portion of a reinforcing bar.

In addition, another objective of the present invention is to firmly join reinforcing bars without a work of aligning centers of the reinforcing bars or a work of aligning screw threads by rotating the reinforcing bars even when end portions of the reinforcing bars to be joined are fixed.

In addition, still another objective of the present invention is to distribute stress from axial compressive force after end portions of a first binding end member and a second binding end member are fitted to abut each other.

In addition, still another objective of the present invention is to enable reinforcing bars to be joined even when the reinforcing bars to be joined are prearranged, when end portion shapes of a first binding end member and a second binding end member cannot abut each other because intervals between the reinforcing bars in coupling reinforcing bar cages are too large or non-uniform, or when a construction error of arranged reinforcing bars occurs.

In addition, still another objective of the present invention is to allow length adjustment in joining reinforcing bars to enable reinforcing bars with end portions spaced apart from each other to be joined in a more extended range or absorb a construction error by a configuration in which a middle binding member and a binding end member are coupled.

In addition, still another objective of the present invention is to enable joining of reinforcing bars when sizes of the reinforcing bars are different and the reinforcing bars are of different types.

In addition, still another objective of the present invention is to enable joining of bar materials including round bars capable of not only joining reinforcing bars but also joining binding portions.

### [Technical Solution]

To achieve the above objectives, a socket-fastening-type reinforcing bar connector using a binding end member according to the present invention is as defined in claim 1 and includes a first reinforcing bar and a second reinforcing bar, a first binding end member bound to the middle binding member bound to the end portion of the first reinforcing bar and having a male screw portion for coupling a fastening socket formed in the longitudinal direction at an outer surface thereof, a second binding end member having one end portion formed of a shape corresponding to a shape of an end portion of the first binding end member and the other end portion bound to the end portion of the second reinforcing bar and spaced apart from the one end portion, and having one or a plurality of steps with one end portion in the axial direction forming any one angle selected from an acute angle, a right angle, and an obtuse angle with respect to the longitudinal direction, and a hollow fastening socket opened in the longitudinal direction to extend in the longitudinal direction to surround and accommodate an outer surface of the second binding end member and an outer surface of the first binding end member, having a female screw portion for coupling a fastening socket that is helically coupled to the male screw portion for coupling a fastening socket of the first binding end member formed in the longitudinal direction at an inner surface thereof, locked to the one or the plurality of steps of the second binding end member, and having one or a plurality of locking steps forming any one angle selected from an acute angle, a right angle, and an obtuse angle with respect to the longitudinal direction, wherein the fastening socket is moved forward toward the first binding end member and rotated in a fastening tightening screw direction such that the locking steps of the fastening socket are tightly supported by the steps of the second binding end member to allow the first binding end member and the second binding end member to be integrally fastened by the fastening socket in order to mechanically join the first reinforcing bar and the second reinforcing bar, a shape of the first binding end member bound to the middle binding member bound to the end portion of the first reinforcing bar is a shape in which one end portion is a bar material shape having a width equal or similar to that of the first reinforcing bar and a transverse cross-sectional surface formed in a circular shape in order to have a structure joined to the middle binding member and the other end portion is a bar material shape having a more extended width than the bar material shape of the one end portion and having the male screw portion for coupling a fastening socket formed at the extended outer surface to have a width that is a sum of a width of an extended bar material shape of the second binding end member and a height of a screw thread in order to be a bar material shape extended by the width being stepped near the end portion along the longitudinal direction, a shape of the second binding end member bound to the end portion of the second reinforcing bar is a shape in which one end portion is a bar material shape having a width equal or similar to that of the second reinforcing bar and a transverse cross-sectional surface formed in a circular shape in order to have a structure joined to the second reinforcing bar and the other end portion is a bar material shape having a more extended width than the bar material shape of the one end portion but being formed in a smaller width than an inner surface of the fastening socket to allow the fastening socket to move at an outer surface and having a step in a form of a protruding band that surrounds the outer surface to be extended by the width being stepped near the step, the step in the form of a protruding band is in the shape of a protruding band surrounding from a portion near the bar material shape in which the width of the second binding end member is extended up to an end surface of the second binding end member or forms a shape of a protruding band that surrounds the portion near the bar material shape in which the width of the second binding end member is extended while having a shortened width, the inner surface of the fastening socket is a cylindrical shape having a circumference to be rotatable in the fastening tightening screw direction while having the longitudinal direction as an axis in order to surround the bar material shape in which the width of the second binding end member is extended and be movably coupled to the outer surface of the second binding end member, a locking step protruding toward a central direction in the shape of a protruding band is included at an opposite end portion of the female screw portion for coupling the fastening socket of the inner surface of the fastening socket to be locked to the one or the plurality of steps of the second binding end member, and the female screw portion for coupling the fastening socket is formed at a portion near the end portion in the first binding end member direction at the inner surface of the fastening socket such that the fastening socket formed to surround the bar material shape in which the width of the second binding end member is extended and the bar material shape in which the width of the first binding end member is extended is helically fastened to the male screw portion for coupling the fastening socket of the bar material shape in which the width of the first binding end member is extended and the locking step and the step in the shape of the protruding band tightly support each other at the same time to allow the end portion of the extended bar material shape of the first binding end member at which the male screw portion for coupling the fastening socket is formed and the end portion of the extended bar material shape of the second binding end member to be integrally coupled which supporting and facing each other. Binding between the first reinforcing bar and the middle binding member, and binding between the second reinforcing bar and the middle binding member are performed by welding. When adjusting the joining length of the first reinforcing bar and the second reinforcing bar a middle binding member is interposed between the first binding end member and the first reinforcing bar and/or the middle binding member is interposed between the second binding end member and the second reinforcing bar. The middle binding members are respectively interposed between the first binding end member and the first reinforcing bar and between the second binding end member and the second reinforcing bar such that the middle binding members are each installed in any case in which adjustment of the joining length of the first reinforcing bar and the second reinforcing bar is required. The middle binding member is interposed either between the first binding end member and the first reinforcing bar such that one end portion of the middle binding member is bound to the end portion of the first reinforcing bar, a male screw portion for coupling the middle binding member is formed in a predetermined section from the one end portion to the other end portion, a middle binding member accommodation groove that accommodates the middle binding member is formed at an end portion of the first binding end member corresponding to the middle binding member, a female screw portion for coupling the middle binding member is formed at an inner surface of the accommodation groove, one or a plurality of lock nut bodies having a circular or polygonal cross-sectional shape are formed at the middle binding member such that a position of the middle binding member is lockable, and the end portion of the first binding end member corresponding to the middle binding member is formed as in one case selected from a case in which a transverse cross-sectional surface from the end portion surface up to a predetermined distance is formed in a circular shape, a case in which the transverse cross-sectional surface is formed in a polygonal shape, and a case in which one or more pairs of grip surfaces facing each other are formed, or the middle binding member is interposed between the second binding end member and the second reinforcing bar such that the one end portion of the middle binding member is bound to the end portion of the second reinforcing bar, the male screw portion for coupling the middle binding member is formed in a predetermined section from the one end portion to the other end portion, the middle binding member accommodation groove that accommodates the middle binding member is formed at an end portion of the second binding end member corresponding to the middle binding member, the female screw portion for coupling the middle binding member is formed at the inner surface of the accommodation groove, the one or the plurality of lock nut bodies having a transverse cross-sectional surface formed in a circular or polygonal shape are formed at the middle binding member such that a position of the middle binding member is lockable, and the end portion of the second binding end member corresponding to the middle binding member is formed as in one case selected from a case in which a transverse cross-sectional surface from the end portion surface up to a predetermined distance is formed in a circular shape, a case in which the transverse cross-sectional surface is formed in a polygonal shape, and a case in which one or more pairs of grip surfaces facing each other are formed. The middle binding member is installable in each of the cases by the middle binding member in the first reinforcing bar direction having one end portion bound to the end portion of the first reinforcing bar, the male screw portion for coupling the middle binding member being formed in the predetermined section from the one end portion to the other end portion, a first middle binding member accommodation groove that accommodates the middle binding member being formed at the end portion of the first binding end member corresponding to the middle binding member, the female screw portion for coupling the middle binding member being formed at an inner surface of the accommodation groove, the one or the plurality of lock nut bodies having the transverse cross-sectional surface formed in a circular or polygonal shape being disposed at the middle binding member such that a position of the middle binding member is lockable, and the end portion of the first binding end member corresponding to the middle binding member being formed as in any one case selected from the case in which the transverse cross-sectional surface from the end portion surface up to a predetermined distance is formed in the circular shape, the case in which the transverse cross-sectional surface is formed in the polygonal shape, and the case in which the one or more pairs of grip surfaces facing each other are formed, and by the middle binding member in the second reinforcing bar direction having one end portion bound to the end portion of the second reinforcing bar, the male screw portion for coupling the middle binding member being formed in a predetermined section from the one end portion to the other end portion, a middle binding member accommodation groove that accommodates the middle binding member being formed at the end portion of the second binding end member corresponding to the middle binding member, the female screw portion for coupling the middle binding member being formed at the inner surface of the accommodation groove, the one or the plurality of lock nut bodies having a transverse cross-sectional surface formed in a circular or polygonal shape being formed at the middle binding member such that a position of the middle binding member is lockable, and the end portion of the second binding end member corresponding to the middle binding member being formed as in one case selected from the case in which the transverse cross-sectional surface from the end portion surface up to a predetermined distance is formed in the circular shape, the case in which the transverse cross-sectional surface is formed in the polygonal shape, and the case in which the one or more pairs of grip surfaces facing each other are formed. The middle binding member is installable in any one case selected from a case in which the middle binding member is bound to the end portion of the first reinforcing bar, the male screw portion for coupling the middle binding member is formed in the predetermined section from the one end portion to the other end portion of the middle binding member, a connection unit is formed at the other end portion of the first binding end member corresponding to the middle binding member, a male screw portion for coupling a connection socket is formed at the connection unit, the connection socket, which is a longitudinal member and a hollow body having one side and the other side opened, that connects the connection unit to the middle binding member is disposed, and a female screw portion helically coupled to the male screw portion for coupling the connection socket and the male screw portion for coupling the middle binding member is formed at an inner surface of the connection socket, and a case in which the middle binding member is bound to the end portion of the second reinforcing bar, the male screw portion for coupling the middle binding member is formed in the predetermined section from the one end portion to the other end portion of the middle binding member, a connection unit is formed at the other end portion of the second binding end member corresponding to the middle binding member, a male screw portion for coupling a connection socket is formed at the connection unit, the connection socket, which is a longitudinal member and a hollow body having one side and the other side opened, that connects the connection unit to the middle binding member is disposed, and a female screw portion helically coupled to the male screw portion for coupling the connection socket and the male screw portion for coupling the middle binding member is formed at an inner surface of the connection socket. The middle binding member is installable in each of the cases by the middle binding member being bound to the end portion of the first reinforcing bar, the male screw portion for coupling the middle binding member being formed in the predetermined section from the one end portion to the other end portion of the middle binding member, a connection unit being formed at the other end portion of the first binding end member corresponding to the middle binding member, the male screw portion for coupling the connection socket being formed at the connection unit, the connection socket, which is a longitudinal member and a hollow body having one side and the other side opened, that connects the connection unit to the middle binding member being disposed, and the female screw portion helically coupled to the male screw portion for coupling the connection socket and the male screw portion for coupling the middle binding member being formed at an inner surface of the connection socket, and by the middle binding member being bound to the end portion of the second reinforcing bar, the male screw portion for coupling the middle binding member being formed in the predetermined section from the one end portion to the other end portion of the middle binding member, the connection unit being formed at the other end portion of the second binding end member corresponding to the middle binding member, the male screw portion for coupling the connection socket being formed at the connection unit, the connection socket, which is a longitudinal member and a hollow body having one side and the other side opened, that connects the connection unit to the middle binding member being disposed, and the female screw portion helically coupled to the male screw portion for coupling the connection socket and the male screw portion for coupling the middle binding member being formed at the inner surface of the connection socket.

In addition, in formation of the connection socket, any one case selected from a case in which an outer surface is spline-processed, a case in which the outer surface is knurl-processed, a case in which a transverse cross-section is formed in a circular shape, a case in which the transverse cross-section is formed in a polygonal shape, and a case in which one or more pairs of grip surfaces facing each other are formed is adopted.

In addition, end portion shapes of the first binding end member and the second binding end member may be any shapes selected from a shape in which the end portion shape of the first binding end member is a protruding portion formed in the longitudinal direction and the end portion shape of the second binding end member is an accommodation unit formed in the same shape as the protruding portion to have the protruding portion fitted thereto and a shape in which the end portion shape of the second binding end member is a protruding portion formed in the longitudinal direction and the end portion shape of the first binding end member is an accommodation unit formed in the same shape as the protruding portion to have the protruding portion fitted thereto, and the end portion shapes of the first binding end member and the second binding end member are exchangeable with each other.

In addition, the end portion shapes of the first binding end member and the second binding end member may be any shapes selected from a shape in which the end portion shape of the first binding end member is any one selected from a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape protruding from the center in the longitudinal direction, and a flat surface and an embossed surface perpendicular to the longitudinal direction, and the end portion shape of the second binding end member is an accommodation unit of the end portion shape of the first binding end member that is formed in the same shape as the end portion shape of the first binding end member, and a shape in which the end portion shape of the second binding end member is any one selected from a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape protruding from the center in the longitudinal direction, and a flat surface and an embossed surface perpendicular to the longitudinal direction, and the end portion shape of the first binding end member is an accommodation unit of the end portion shape of the second binding end member that is formed in the same shape as the end portion shape of the second binding end member, and the end portion shapes of the first binding end member and the second binding end member are exchangeable with each other.

In addition, the end portion shapes of the first binding end member and the second binding end member may be any shapes selected from a shape in which the end portion shape of the first binding end member is a multi-step inclined type protruding portion having one or a plurality of sections in which a surface area gradually decreases and sections in which a surface area is constant in the longitudinal direction and the end portion shape of the second binding end member is an accommodation unit formed in a shape corresponding to the protruding portion, and a shape in which the end portion shape of the second binding end member is a multi-step inclined type protruding portion having one or a plurality of sections in which a surface area gradually decreases and sections in which a surface area is constant in the longitudinal direction and the end portion shape of the first binding end member is an accommodation unit formed in a shape corresponding to the protruding portion, and the end portion shapes of the first binding end member and the second binding end member are exchangeable with each other.

In addition, the embossed surface may be formed of a convex portion having one or a plurality of any one selected from a longitudinal cross-sectional surface formed in a triangular shape, a triangular shape with a round vertex, a quadrangular shape, a quadrangular shape with a round edge angle, a cut spherical shape, a cut elliptical-spherical shape, a cross shape formed at an end portion surface, a shape in which a cross shape and a circular shape are combined, and a corrugated shape curved in a wave form all of which are equidistant from the center of the end portion surface, and a concave portion formed in a shape accommodating the convex portion.

In addition, a longitudinal cross-section of any one selected from the end portion shapes of the first binding end member and the second binding end member forming a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape is formed to form multiple stages, and an angle formed by the multiple stages is any one angle selected from an acute angle, a right angle, and an obtuse angle.

In addition, the locking steps and the steps are disposed in a plurality and formed in multiple stages to distribute stress caused by a tensile force concentrated to the fastening socket, and an angle formed by the locking steps and the steps is any one angle selected from an acute angle, a right angle, and an obtuse angle.

In addition, the sizes of the first reinforcing bar and the second reinforcing bar are different.

In addition, in formation of the fastening socket, any one case selected from a case in which an outer surface is spline-processed, a case in which the outer surface is knurl-processed, a case in which a transverse cross-section is formed in a circular shape, a case in which the transverse cross-section is formed in a polygonal shape, and a case in which one or more pairs of grip surfaces facing each other are formed is adopted.

In addition, joining of adjacent bar materials having end portions facing each other is possible by any one case selected from a case in which the first binding end member and the middle binding member are respectively bound to one side and the other side of the end portions of the bar materials, a case in which the second binding end member and the middle binding member are respectively bound to one side and the other side of the end portions of the bar materials. According to the invention, the binding between the first reinforcing bar and the middle binding member, and the binding between the second reinforcing bar and the middle binding member are performed by any one selected from friction welding, linear friction welding, arc stud welding method, butt welding, ultrasonic vibration welding, resistance welding, plasma welding, electronic beam welding, laser welding, high-frequency welding, and argon welding.

In addition, when the binding is performed by the arc stud welding method, an ignition tip is inserted and installed at a center of an end portion surface of the first binding end member or the second binding end member to be welded.

### [Advantageous Effects]

A socket-fastening-type reinforcing bar connector using a binding end member of the present invention having a first binding end member, a second binding end member, one or two middle binding members, and a fastening socket performing integral fastening is an independent connector capable of being bound to an end portion of a reinforcing bar that enables joining of reinforcing bars by integrated coupling with only a simple element.

In addition, constructability is superior since a work of aligning centers of reinforcing bars or a work of aligning screw threads by rotating the reinforcing bars as in other methods of joining reinforcing bars are not required even when end portions of the reinforcing bars to be joined are fixed, and a constructor may complete firm joining of reinforcing bars by simply moving and rotating a fastening socket in a fastening direction.

In addition, when a longitudinal cross-section of any one selected from end portion shapes forming a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape is formed to form multiple stages, a contact area increases after the end portions of the first binding end member and the second binding end member are fitted to abut each other, causing an effect of distributing stress from the axial compressive force.

In addition, when reinforcing bars to be joined are prearranged and end portion shapes of a first binding end member and a second binding end member cannot abut each other because intervals between reinforcing bars in coupling reinforcing bar cages are too large or non-uniform, or when a construction error of arranged reinforcing bars occurs, joining the reinforcing bars is enabled by enabling positions to be adjusted such that the end portion shapes of the first binding end member and the second binding end member abut each other to be tightly fitted or absorbing the construction error by interposing a middle binding member and rotating the first binding member or the second binding end member inserted into the middle binding member by a screw to be moved back and forth.

In addition, by forming a configuration in which the connection unit and the male screw portion are formed at the first binding end member and the second binding end member, end portion shapes of the first binding end member and the second binding end member spaced further apart may be adjusted to abut each other because it is possible to adjust a joining length in an extended range using the connection unit and to adjust a length of reinforcing bars in a more extended range and absorb a construction error using the connection unit.

In addition, to facilitate arc generation, a groove is formed at a center of an end portion surface of a binding end member to be welded to insert and install an ignition tip that performs ignition to ignite the arc at the center of the end portion surface of the binding end member such that melting from the central portion occurs due to ignition of the arc generation from the center of the end portion surface even when the binding end member is wide, thereby obtaining a high-quality welding surface.

In addition, even when sizes of the first reinforcing bar and the second reinforcing bar are different and in a method of joining reinforcing bars of different types, joining is possible by simply binding the first binding end member and the second binding end member to middle binding members bound to the end portions. In addition, with respect to bar materials including round bars capable of not only joining reinforcing bars but also joining binding portions, adjacent bar materials having end portions facing each other can be joined by the first binding end member, the second binding end member, and the middle binding end member, which is bound to the end portions of the bar materials according to the invention.

### [Description of Drawings]

FIG. 1 is a perspective view illustrating an assembly shape according to the present invention.
FIG. 2 is a cross-sectional view illustrating connection of reinforcing bars according to a first example in detail.
FIG. 3 is a cross-sectional view illustrating connection of reinforcing bars according to a second embodiment of the present invention in detail.
FIG. 4 is a cross-sectional view illustrating connection of reinforcing bars according to a third example in detail.
FIG. 5 is a cross-sectional view illustrating connection of reinforcing bars according to a fourth example in detail.
FIG. 6 is a cross-sectional view illustrating connection of reinforcing bars according to a fifth example in detail.
FIG. 7 is a cross-sectional view illustrating connection of reinforcing bars according to a sixth example in detail.
FIG. 8 is a cross-sectional view illustrating connection of reinforcing bars according to a seventh example in detail.
FIG. 9 is a cross-sectional view illustrating a processing recessed groove of the present invention in detail.
FIG. 10 is a cross-sectional view illustrating a plurality of steps and locking portions of the present invention.
FIG. 11 is a cross-sectional view illustrating a case of the present invention in which a protruding portion is formed at a second binding end member and an accommodation unit is formed at a first binding end member in detail.
FIGS. 12 to 14 are cross-sectional views illustrating end portion shapes of the first binding end member and the second binding end member of the present invention in detail.
FIGS. 15 and 16 are cross-sectional views illustrating embossed surfaces of the first binding end member and the second binding end member of the present invention in detail.
FIG. 17 is a cross-sectional view illustrating multi-staged end surface shapes of the first binding end member and the second binding end member of the present invention in detail.
FIG. 18 is a cross-sectional view illustrating a state in which an ignition tip is inserted and installed at an end portion surface of the first binding end member of the present invention in detail.
FIG. 19 is a partially cut view illustrating joining of reinforcing bars between upper and lower reinforcing bar cages according to the first example in detail.
FIG. 20 is a partially cut view illustrating joining of reinforcing bars between upper and lower reinforcing bar cages according to the second embodiment of the present invention in detail.

### [Modes of the Invention]

Hereinafter, a socket-fastening-type reinforcing bar connector using a binding end member according to the present invention will be described in detail with reference to the accompanying drawings.

First, in this specification, a longitudinal cross-section represents an end surface shape shown when cut in the longitudinal direction of a reinforcing bar, and a transverse cross-section represents an end surface portion shown when cut in a direction orthogonal to the longitudinal direction of the reinforcing bar.

In this specification, the same reference numerals are used when and where possible, but the same elements may be represented by different reference numerals for convenience in different embodiments.

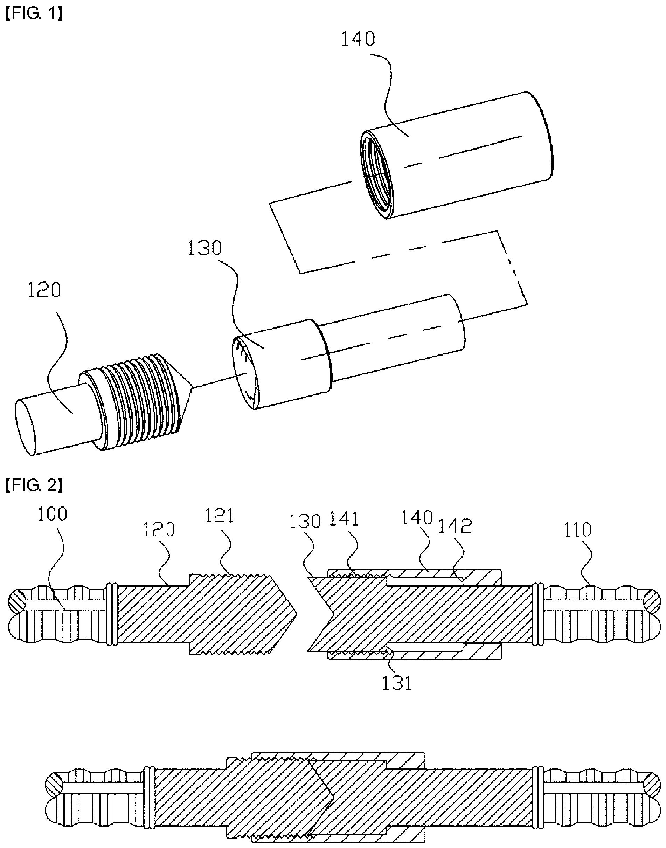

First, FIG. 2 is a cross-sectional view illustrating connection of reinforcing bars according to a first example in detail.

The first example, not forming part of the claimed subject matter, includes a first reinforcing bar 100, a second reinforcing bar 110, a first binding end member 120, a second binding end member 130, and a fastening socket 140.

First, two adjacent reinforcing bars having end portions facing each other are the first reinforcing bar 100 and the second reinforcing bar 110, and each of the reinforcing bars is a reinforcing bar selected from a deformed reinforcing bar and a threaded joint type reinforcing bar in accordance with each embodiment.

First, the first binding end member 120, which is a longitudinal member formed in the longitudinal direction of the reinforcing bar, is bound to an end portion of the first reinforcing bar 100, an end portion coupled to the first reinforcing bar 100 may have a width of a cross-sectional area similar to that of an outer surface of the first reinforcing bar 100 to form a joined structure, and an end portion shape in a direction abutting the second binding end member 130 for joining and connecting reinforcing bars may have a width of a cross-sectional area adjusted as needed such that the width of the cross-sectional area supports a tensile force.

A binding surface in a reinforcing bar direction of the first binding end member 120 may preferably have an end portion surface precisely cut-processed to be orthogonal to the longitudinal direction of the reinforcing bar to increase quality of the binding surface.

A male screw portion 121 for coupling the fastening socket 140 formed in the longitudinal direction is disposed at an outer surface of the first binding end member 120. The male screw portion 121 is the male screw portion 121 for coupling the fastening socket 140 that is coupled to the fastening socket 140 to be described below to be integrated with the fastening socket 140. A range of a section in which the male screw portion is formed is formed of a coupling length and size that enables joining by the fastening socket 140. The range of the screw section preferably has a width similar to that of a diameter of a transverse cross-sectional surface of a reinforcing bar to be fastened. The screw portion may have various shapes and classes for precise joining with the first binding end member 120.

The second binding end member 130 abutting the first binding end member 120 is a member extending in the longitudinal direction as the first binding end member 120. The other end portion of the second binding end member 130 is bound to an end portion of the second reinforcing bar 110, one end portion thereof abuts the first binding end member 120, and the abutting may be performed with various shapes corresponding to the first binding end member 120. A width of a transverse cross-section in the abutting direction of the second binding end member 130 and a width of a transverse cross-section in the abutting direction of the first binding end member 120 are formed such that outer surfaces form a joined structure in which the width of the binding end member at which the male screw portion 121 for coupling the fastening socket 140 is formed is preferably widely formed to be increased as much as the height of screw threads.

In addition, a shape forming a step 131 is disposed apart from one end portion of the second binding end member 130 with one end portion in the axial direction, which is the longitudinal direction perpendicular to the longitudinal direction. One or a plurality of the steps 131 may be disposed, and a plurality of the steps 131 are preferably disposed when the size of the reinforcing bar to be joined is large.

Accordingly, the width of the second binding end member 130 forms a shape in which the width of the second reinforcing bar 110 to which the second binding end member 130 will be bound and the width of the step 131 are added, and all of the widths of the plurality of steps 131 are added when the plurality of steps 131 are disposed. The second binding end member 130 has a width similar to that of the second reinforcing bar 110 to form a joined structure while having a stepped shape near a middle portion by the shape of the step 131.

After the end portions of the first binding end member 120 and the second binding end member 130 are made to abut each other, in order for the abutting end portions to be sufficiently accommodated into an inner surface of the fastening socket 140 for fastening the first binding end member 120 and the second binding end member 130 and for joining of the abutting end portions to be firm after the accommodation, outer surfaces of the abutting end portion shapes of the first binding end member 120 and the second binding end member 130 closely come in contact with the inner surface of the fastening socket 140.

Accordingly, the fastening socket 140 is formed in a hollow shape with one side and the other side open, has the width of the inner surface formed in a width accommodating the outer surfaces of the first binding end member 120 and the second binding end member 130, and extends in the longitudinal direction such that the abutting end portions of the first binding end member 120 and the second binding end member 130 may be accommodated in the fastening socket 140 even after the abutting end portions of the first binding end member 120 and the second binding end member 130 are locked to the step 131. Therefore, the fastening socket 140 extends in the longitudinal direction to surround and accommodate all of the outer surfaces of the first binding end member 120 and the second binding end member 130, and a female screw portion 141 helically coupled to the male screw portion 121 for coupling the fastening socket 140 at the outer surface of the first binding end member 120 is formed at the inner surface of the fastening socket.

In addition, one or a plurality of locking steps 142 formed in a shape that may be locked to the step 131 of the second binding end member 130 are formed at the inner surface of the fastening socket 140 and the female screw portion is fastened to the male screw portion 121 for coupling the fastening socket 140 of the first binding end member 120 after the locking step 142 is locked to the step 131 of the second binding end member 130, so that one side of the fastening socket 140 is fixed by being supported by the step 131 and the locking step 142 and the other side thereof is fixed by coupling of the screw portions.

In order for the shapes of the step 131 and the locking step 142 to be tightly locked easily in the fastening process, surfaces forming the step 131 and the locking step 142 may be formed in a desired angle among an acute angle, a right angle, and an obtuse angle with respect to the longitudinal direction of the fastening socket 140. That is, when a longitudinal end surface shape of the step 131 has an end portion surface toward a center in the longitudinal direction formed to form an acute angle with the axial direction and the shape of the locking step 142 locked to the step 131 is also formed in the same shape, locking by the surface formed of an acute angle of the locking step 142 of the fastening socket 140 may occur more easily than when the surfaces forming the step 131 and the locking step 142 are formed with only a right angle as the fastening socket 140 advances in the fastening direction in the fastening process, and a surface area that is tightly supported increases even after the locking, thereby enabling more firmly integrated coupling.

For this, the fastening socket 140 is pre-coupled to the second binding end member 130 before the second binding end member 130 is bound to the second reinforcing bar 110 to allow the fastening socket 140 to be moved toward the first binding end member 120 after the second binding end member 130 is bound to the second reinforcing bar 110.

In a process of fastening with the above configuration, when the first binding end member 120 is made to abut the end portion of the second binding end member 130 after the second binding end member 130 is bound to the second reinforcing bar 110, the fastening socket 140 is moved forward toward the first binding end member 120 and rotated in the fastening tightening screw direction such that the locking step 142 of the fastening socket 140 comes in close contact with and is supported by the step 131 of the second binding end member 130 to allow the female screw portion and the male screw portion to be coupled in order for the first binding end member 120 and the second binding end member 130 to be integrally fastened by the fastening socket 140.

The first binding end member 120, the second binding end member 130, and the fastening socket 140 that perform the integral fastening form an independent connector that may be bound to an end portion of a reinforcing bar (not according to the claimed subject matter) such that the integral fastening is possible with only a simple element.

That is, due to the locking step 142 of the fastening socket 140 coming in complete contact with the step 131 to move while pulling the second binding end member 130 as the fastening socket 140 is rotated in the coupling direction and the first binding end member 120 and the second binding end member 130 being strongly pulled while facing each other by the locking step 142 and the step 131, the end portion shapes of the first binding end member 120 and the second binding end member 130 completely come in contact with each other, and compressed fastening of the first binding end member 120 and the second binding end member 130 is completed as the fastening socket 140 is further rotated in the coupling direction.

That is, constructability is superior since a work of aligning centers of reinforcing bars or a work of aligning screw threads by rotating the reinforcing bars as in other methods of joining reinforcing bars is not required even when end portions of the reinforcing bars to be joined are fixed, and a constructor may complete firm joining of the reinforcing bars by simply moving and rotating the fastening socket 140 in the fastening direction.

To describe the first binding end member 120, the second binding end member 130, and the fastening socket 140, which are elements of an embodiment of this invention in detail, the binding end member, which is divided into two and formed of the first binding end member 120 and the second binding end member 130, is integrated with the fastening socket 140 by being helically coupled to the fastening socket 140, and two reinforcing bars are joined by binding and integrating the first binding end member 120 and the second binding end member 130 through the interposition of a middle binding member to the two reinforcing bars and fastening the two binding end members by a screw using the fastening socket 140.

First, for a width of the shape of the first binding end member 120 to be the same as or similar to that of the shape of the first reinforcing bar 100 to have a structure in which the first binding end member 120 and the first reinforcing bar 100 are joined by positioning between a middle binding member, one end portion shape of the first binding end member 120 is a bar material shape having a transverse cross-sectional surface formed in a circular shape and the other end portion shape thereof is a bar material shape having a slightly larger width by extending the width of the end portion shape to be formed similar to that of the end portion shape of the second binding end member 130, and the male screw portion 121 for coupling the fastening socket is formed at the extended portion, thereby having a width that is a sum of the width of the end portion shape of the second binding end member 130 and the height of a screw thread in order to be a bar material shape extended by the width being stepped near the end portion in the longitudinal direction.

That is, the width of the end portion of the first binding end member 120 is formed larger than the width of the end portion of the second binding end member 130 by the height of a screw thread to be coupled to the fastening socket 140. Accordingly, the first binding end member 120 becomes a bar material shape forming a stepped structure at a portion near an end portion toward the second reinforcing bar 110. Accordingly, due to the stepped structure, the bar material shape having a width that is the same as or similar to that of the shape of the first reinforcing bar 100 becomes a bar material shape that is extended by the width stepped in a layered form. The shape extended in the layered form includes any one extended shape selected from an acute-angled shape, a right-angled shape, an obtuse-angled shape, and a tapered shape and a structure in which the width is extended is included regardless of the form.

For a width of the shape of the second binding end member 130 to also be the same as or similar to that of the shape of the second reinforcing bar 110 to have a structure in which the second binding end member 130 and the second reinforcing bar 110 are joined, one end portion shape of the second binding end member 130 is a bar material shape having a transverse cross-sectional surface formed in a circular shape and the other end portion shape thereof is a bar material shape having a slightly larger width, wherein the width is slightly smaller than the inner surface of the fastening socket 140 to allow the fastening socket 140 to move along the outer surface and the step 131 formed in the shape of a protruding band to which the locking step 142 of the fastening socket 140 being moved is locked is formed to become a bar material shape having a stepped structure. Consequently, due to the stepped structure, the bar material shape becomes a shape extended by the width stepped in a layered form near an end portion toward the first reinforcing bar 100 to form a width that is the same as or similar to that of the end portion shape of the first binding end member 120. The shape being extended in the layered form includes a structure in which the width is extended regardless of the form.

The step 131 in the form of a protruding band may be in the shape of a protruding band surrounding from a portion near the bar material shape in which the width of the second binding end member 130 is extended up to an end portion surface of the second binding end member 130 or in the shape of a protruding band that surrounds the portion near the bar material shape in which the width of the second binding end member 130 is extended while having a shortened width. When the step 131 forms the shape of the protruding band that surrounds while the width is shortened and becomes narrow, a shape behind a point at which the step 131 ends in the longitudinal direction of the second binding end member 130 may be a bar material shape while the width may be the same as that of the bar material shape in front of the point at which the step 131 starts or may be slightly adjusted.

The inner surface of the fastening socket 140 is a cylindrical shape having a circumference that is rotatable in the fastening tightening screw direction while having the longitudinal direction as an axis to move along the outer surface of the second binding end member 130 or move in a rotational direction for helical fastening and has a movable structure that surrounds the width of the binding end member which is a bar material shape overall. Also, the locking step 142 protruding in a central direction in the shape of a protruding band is disposed at an opposite end portion of the female screw portion 141 for coupling the fastening socket at the inner surface of the fastening socket 140 to be locked to the step 131 of the second binding end member 130. The step 131 forms the shape of a protruding band at the outer surface of the second binding end member 130 and the locking step 142 forms the shape of a protruding band at the inner surface of the fastening socket 140.

Since the inner surface of the fastening socket 140 has a circumference that is rotatable in the fastening tightening screw direction while having the longitudinal direction as an axis and the female screw portion 141 for coupling the fastening socket is formed at the inner surface of the fastening socket 140, the bar material shape in which the width of the second binding end member 130 is extended is surrounded by an inner portion of the fastening socket 140 and the female screw portion 141 for coupling the fastening socket is formed at an inner surface of an end portion further protruding toward the first binding end member 120 such that a structure allowing the bar material shape in which the width of the second binding end member 130 is extended and the bar material shape in which the width of the first binding end member 120 is extended to abut each other is formed while enabling the fastening socket 140 to be helically fastened to the male screw portion 121 for coupling the fastening socket of the bar material shape in which the width of the first binding end member 120 is extended, and the locking step 142 and the step 131 in the shape of a protruding band strongly come in contact with and are supported by each other as the fastening socket 140 is helically fastened, thereby enabling an end portion of the extended bar material shape in which the male screw portion 121 for coupling the fastening socket of the first binding end member 120 is formed and the end portion of the extended bar material shape of the second binding end member 130 to be integrally coupled while being supported facing each other.

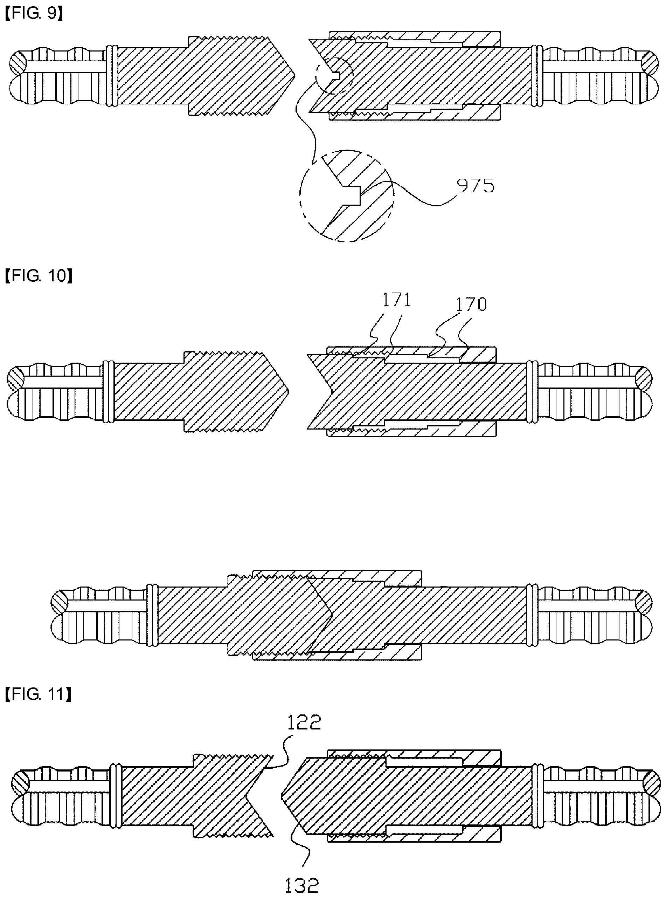

Meanwhile, referring to FIG. 10, since a tensile force occurring at an end portion is supported by a screw coupling structure of the fastening socket and the first binding end member and a configuration in which the locking step of the fastening socket and the step of the second binding end member come in close contact and are supported in accordance with a size of reinforcing bars to be joined, when the locking step 170 and the step 171 are formed in multiple stages, the tensile force is distributed throughout the plurality of steps 171 sequentially coming in close contact with and being supported by each other, thus forming a stable holding structure.

To bear a tensile strength of reinforcing bars to which the step 131 and the locking step 142 are to be fastened, cross-sectional areas of the step 131 and the locking step 142 are the same as cross-sectional areas of the reinforcing bars to be bound or are formed as an area slightly adjusted depending on the strength of the reinforcing bars in accordance with the cross-sectional areas of the reinforcing bars to be bound.

In addition, a shape of an end portion at which the first binding end member 120 and the second binding end member 130 are made to abut each other may be formed in a wide variety of ways.

First, the end portion shape of the first binding end member 120 may be a protruding portion formed in the longitudinal direction, and the end portion shape of the second binding end member 130 may be an accommodation unit formed in the same shape as the protruding portion to have the protruding portion fitted thereto. That is, an end portion may protrude from the first binding end member 120 and the protruding end portion may form a configuration in which abutting between the first binding end member 120 and the second binding end member 130 is technically simple in accordance with a characteristic of a protruding shape. The abutting between the first binding end member 120 and the second binding end member 130 provides a technical characteristic not only in coupling one reinforcing bar with another reinforcing bar but also in a work of coupling reinforcing bar cages to enable a series of main reinforcing bars forming a reinforcing bar cage to be smoothly coupled to main reinforcing bars of a reinforcing bar cage disposed at a lower portion. When the end portion shape of the second binding end member 130 is formed in the same shape as the first binding end member 120 toward the second reinforcing bar 110 to form the accommodation unit by being concavely formed instead of protruding by being convexly formed, the accommodation unit to which the protruding portion is perfectly fitted may be formed.

Meanwhile, referring to FIG. 11, the protruding portion need not necessarily be disposed at the first binding end member 120, but a protruding portion 132 may be disposed at the second binding end member 130, and conversely, an accommodation unit 122 of the protruding portion may be disposed at the first binding end member 120. That is, a direction of the protrusion and a direction of the accommodation may be selectively formed by being changed with each other in accordance with a position and a condition of joining reinforcing bars.

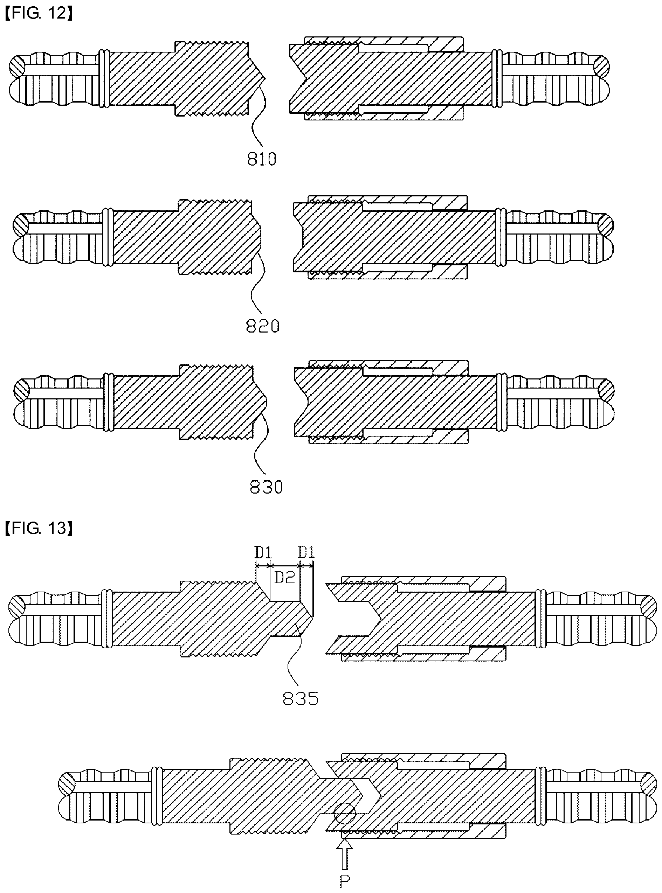

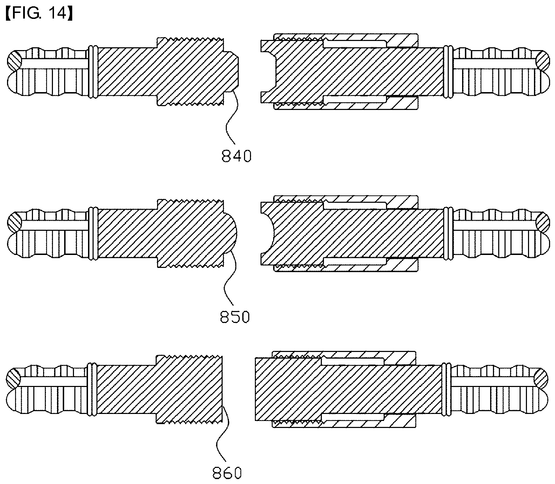

Referring to FIGS. 12 to 14, the end portion shape of the first binding end member 120 may be, for example, any one selected from a cone 810, a truncated cone 820, a rounded cone 830, a cylinder, a polygonal pyramid, a truncated polygonal pyramid 840, a rounded polygonal pyramid, a polygonal column, a cut spherical shape, and a cut elliptical-spherical shape 850 protruding from the center in the longitudinal direction, and a flat surface 860 and an embossed surface perpendicular to the longitudinal direction.

First, a shape of the cone 810 protruding from the center in the longitudinal direction may have a longitudinal cross-section of the end portion shape formed in a shape in which a vertex of the cone 810 is formed toward the second reinforcing bar 110 while a circumference of a lower portion of the cone 810 may be formed to have various area proportions with respect to a cross-sectional area of the first reinforcing bar 100. A transverse cross-sectional area is increased to reach the circumference of the lower portion of the shape of the cone 810 when the circumference of the lower portion is formed corresponding to the cross-sectional area of the first reinforcing bar 100, and the transverse cross-sectional area is decreased to reach the circumference of the lower portion of the shape of the cone 810 when the circumference of the lower portion is formed smaller than the cross-sectional area of the first reinforcing bar 100.

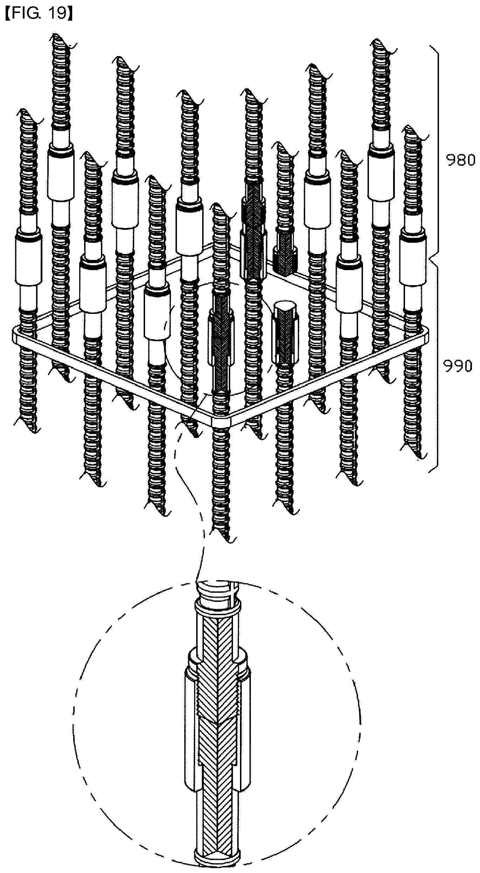

Referring to FIG. 19, with respect to the end portions of the first binding end member 120 formed in the shape of the cone 810, when end portions of reinforcing bar cages of a prefabricated reinforcing bar network to be joined are not uniform in assembly of reinforcing bar cages, vertices of shapes of the cone 810 that are end portion shapes of the first binding end member 120 bound by inter-positioning a middle binding member to end portions of a plurality of main reinforcing bars that have come in contact at once come in contact with predetermined points of the accommodation units formed in the same shape as the cone 810 of the second binding end member 130 bound to end portions of the plurality of main reinforcing bars at a lower portion to be naturally guided for the upper and lower reinforcing bar cages to abut each other and be tightly fitted.

That is, when the upper reinforcing bar cage is lifted by lifting equipment to align central axes of end portions of the reinforcing bar cage to be connected to the lower reinforcing bar cage and the upper reinforcing bar cage is gradually lowered while adjusting to align a central line of each of the reinforcing bars, the central axes are naturally aligned as the protruding portion in the shape of the cone 810 of the first binding end member 120 bound to end portions of reinforcing bars of the upper reinforcing bar network by positioning between them a middle binding member is guided by the accommodation unit in the shape of the cone 810 of the second binding end member 130 such that the upper and lower reinforcing cages are made to abut each other, and the upper and lower reinforcing cages are fastened by lifting and fastening the fastening socket 140 pre-coupled to the reinforcing bars of each of the reinforcing bar networks toward the first reinforcing bar 100 while the upper and lower reinforcing cages are abutting each other.

Furthermore, the shape of the cone 810 may be a shape of the truncated cone 820 that is flatly cut in the transverse direction at a predetermined point. Or, a vertex of the cone may be roundly processed to form a shape of the rounded cone 830 that has a round shape at a vertex. Also, a circumference may be formed at a desired distance away from the center within a range of an outer diameter of the first binding end member 120 to be a cylindrical boss that enables the abutting. Furthermore, when an end portion surface of the cylindrical shape is a flat surface, shapes of a cone, a truncated cone, a rounded cone, a cylinder, a polygonal pyramid, a truncated polygonal pyramid, a rounded polygonal pyramid, a polygonal column, a cut spherical shape, a cut elliptical-spherical shape, and an embossed surface may be disposed again on the flat end portion. Thus, the modified embodiment is also included in the scope of the present invention.

In addition, the end portion shape of the first binding end member 120 protruding from the center in the longitudinal direction may be in the shape of a polygonal pyramid that is formed from a polygon having a lower portion toward the first reinforcing bar 100 forming a polygon and a cross-sectional area gradually being narrowed toward an upper portion, or in the shape of a truncated polygonal pyramid 840 that is a shape in which the polygonal pyramid is flatly cut in the transverse direction at a predetermined point. Alternatively, a vertex of the polygonal pyramid may be roundly processed to form a shape of a rounded polygonal pyramid that has a round shape formed at a vertex. Also, an edge forming a polygon may be formed at a desired distance from the center within the range of the outer diameter of the first binding end member 120 to be in the shape of a polygonal column that enables the abutting. Furthermore, when an end portion surface of the polygonal column shape is a flat surface, shapes of a cone, a truncated cone, a rounded cone, a cylinder, a polygonal pyramid, a truncated polygonal pyramid, a rounded polygonal pyramid, a polygonal column, a cut spherical shape, a cut elliptical-spherical shape, and an embossed surface may be disposed again on the flat end portion. Thus, the modified embodiment is also included in the scope of the present invention.

In addition, the end portion shape may be formed in a cut spherical shape that has a curved surface to facilitate the abutting or formed in a cut elliptical-spherical shape 850 that has an inner diameter of one side extended to form an ellipse to have different surface curvatures at different points.

That is, the cut spherical shape and the cut elliptical-spherical shape 850 include a case in which a shape in which a perfectly spherical shape or a rotational ellipsoid is cut at a predetermined point forms the end portion shape of the first binding end member 120. The cut spherical shape and the cut elliptical-spherical shape 850 are shapes cut by surfaces parallel or non-parallel to the end portion surface of the binding end member, and include both shapes with a definite side or peak and roundish shapes with no definite side or peak.

In addition, the end portion shape of the first binding end member 120 may form the flat surface 860 that is perpendicular to the longitudinal direction and an abutting end surface may form the flat surface 860, or embossed surfaces may be formed. Also with respect to this shape, when the end portion shape of the second binding end member 130 is formed in the same shape as the first binding end member 120 to form the accommodation unit to be concave instead of convex toward the second reinforcing bar 110, the accommodation unit to which the protruding portion is perfectly fitted may be formed.

The end portion shape need not necessarily be disposed at the first binding end member 120, but the shape of the protruding portion 132 may be disposed at the second binding end member 130, and conversely, the accommodation unit 122 of the shape may be disposed at the first binding end member 120. That is, a direction of the convex formation and a direction of the concave formation in which the accommodation unit is formed may be selectively formed by being changed with each other in accordance with a position and a condition of joining reinforcing bars.

Meanwhile, referring to FIG. 13, the end portion shape of the first binding end member 120 or the second binding end member 130 may form, for example, a multi-step inclined type protruding portion 835 protruding from the center in the longitudinal direction.

That is, the multi-step inclined type protruding portion 835 is an inclined type protruding portion having multiple steps formed at an end in the longitudinal direction, and is formed of sections D1 in which a surface area of a cross-sectional surface perpendicular to a central axis line narrows in the longitudinal direction and a section D2 in which the surface area is constant.

When performing a work of connecting and joining vertical reinforcing bars, the multi-step inclined type protruding portion 835 is guided and inserted into the accommodation unit from a contact surface of the binding end member interfering from the sections D1 in which the surface area narrows.

Accordingly, a shaft center of each of the main reinforcing bars may be aligned by the multi-step inclined type protruding portion 835 when clusters of prefabricated reinforcing bar networks are coupled, thereby facilitating a configuration of a connecting and joining portion when performing on-site construction of a reinforcing bar network to which a prefabrication method is applied.

In addition, the multi-step inclined type protruding portion 835 is inserted into the accommodation unit from the section D2 in which the surface area is constant for joining and connecting in a work of connecting and joining horizontal reinforcing bars, thereby removing a risk of a reinforcing bar to be joined sliding out of the accommodation unit and being lowered from a support point P generated by a section in which a cross-sectional area is constant and a risk of the reinforcing bar to be joined deviating from the central axis line, and thus efficiency of the work of connecting and joining the horizontal reinforcing bars for a beam structure, etc. may be improved.

The accommodation unit of the multi-step inclined type protruding portion 835 is formed in a shape corresponding to the multi-step inclined type protruding portion 835. When the accommodation unit has an inner surface formed in the same shape as the multi-step inclined type protruding portion 835, the accommodation unit may be a fitting recessed groove, and the multi-step inclined type protruding portion 835 may be fitted and matched with the accommodation unit.

The multi-step inclined type protruding portion 835 and the accommodation unit of the first binding end member 120 and the second binding end member 130 may be changed with each other.

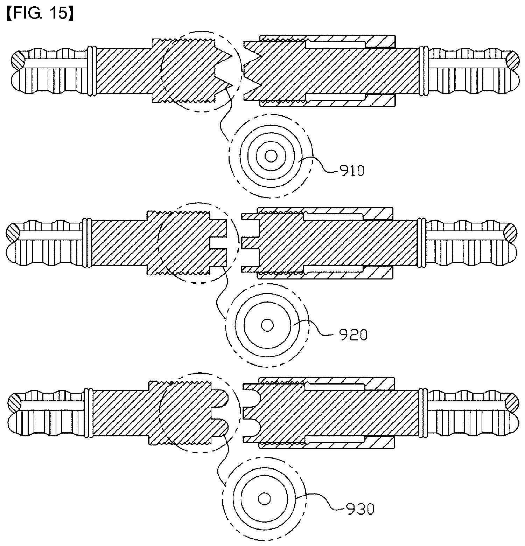

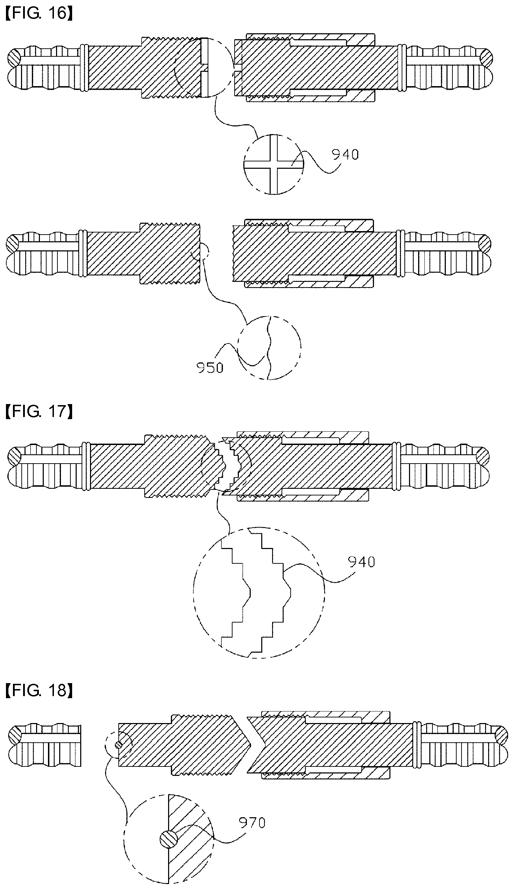

Referring to FIGS. 15 and 16, the embossed surface forming the end portion shape of the first binding end member 120 may be formed of a convex portion having one or a plurality of any one selected from a triangular shape 910, a quadrangular shape 920, a triangular shape with rounded vertices, a quadrangular shape 930 with rounded corners, a cut spherical shape, a cut elliptical-spherical shape, a cross shape 940 formed at an end portion surface, a shape in which a cross shape and a circular shape are combined, and a corrugated shape 950 which protrude from the end portion surface, and a concave portion formed in a shape accommodating the convex portion.

First, the embossed portion may be formed of a convex portion having one or a plurality of cross-sectional shapes equidistant from the center of the end portion surface in the longitudinal direction formed in the triangular shape 910 and a concave portion accommodating the convex portion formed at the second binding end member 130.

That is, the embossed surface in the triangular shape 910 is a shape in which a plurality of protruding portions formed in the triangular shape 910 are formed when a longitudinal cross-section of the first binding end member 120 is viewed, is a circular convex portion having an edge formed toward an upper end when an end portion surface is viewed, is a shape in which the same shape is recessed when a longitudinal cross-section of the second binding end member 130 is viewed, and is a concave portion accommodating the circular convex portion when an end portion surface is viewed. Also, when vertices are rounded, an embossed surface in the triangular shape forming a round shape is formed.

The embossed surface may be an embossed surface formed not only in the triangular shape 910 but in the quadrangular shape 920. That is, the embossed surface in the quadrangular shape 920 is a shape in which a plurality of protruding portions formed in the quadrangular shape 920 are formed when a longitudinal cross-section of the first binding end member 120 is viewed, is a circular convex portion having two edges formed toward an upper end when an end portion surface is viewed, is a shape in which the same shape is recessed when a longitudinal cross-section of the second binding end member 130 is viewed, and is a concave portion accommodating the circular convex portion when an end portion surface is viewed. Also, when vertices are rounded, an embossed surface in the quadrangular shape 930 forming a round shape is formed.

Furthermore, when the end portion surface of the first binding end member 120 is viewed, the end portion shape may form an embossed surface formed of a shape in which a plurality of cut spheres or cut ellipses protrude.

In addition, when the end portion surface of the first binding end member 120 is viewed, a protruding portion in the cross shape 940 may be formed. The protruding portion having intersecting straight lines to form the cross may form a more densely intersecting shape by having a plurality of straight lines radially arranged with respect to the center or the cross shape 940 may be combined with the circular protruding portion.

Furthermore, a protruding portion in the corrugated shape 950 curved in a wave form may be formed at the end portion surface of the first binding end member 120, and an accommodation unit of the corrugated shape 950 may be formed at the end portion surface of the second binding end member 130 to be embossedly coupled.

Also with respect to the embossed surface, the convex portion and the concave portion may be changed with each other by the convex portion being formed at the second binding end member 130 instead of being formed at the first binding end member 120 and the accommodation unit being formed at the first binding end member 120.

Since fitting in a process in which end portion shapes are made to abut each other is difficult when the protruding shape of the embossed surface is too small with respect to a diameter of the first binding end member 120, and interference or deformation may occur when the first binding end member 120 and the second binding end member 130 are joined if the protruding shape of the embossed surface is too large, the protruding shape is preferably formed selectively in the most preferable shape.

The end portion shapes of the first binding end member 120 and the second binding end member 130 are not limited to any one of the above embodiments, and shapes in which the shapes enabling close interlocking are arbitrarily combined may also be easily derived.

The first binding end member 120, the second binding end member 130, and the fastening socket are individual elements, and particularly, each of the first binding end member 120 and the second binding end member, are independent members formed of single pieces. In the first embodiment of the present invention, joining of reinforcing bars is possible because the three parts that are each one piece form one group.

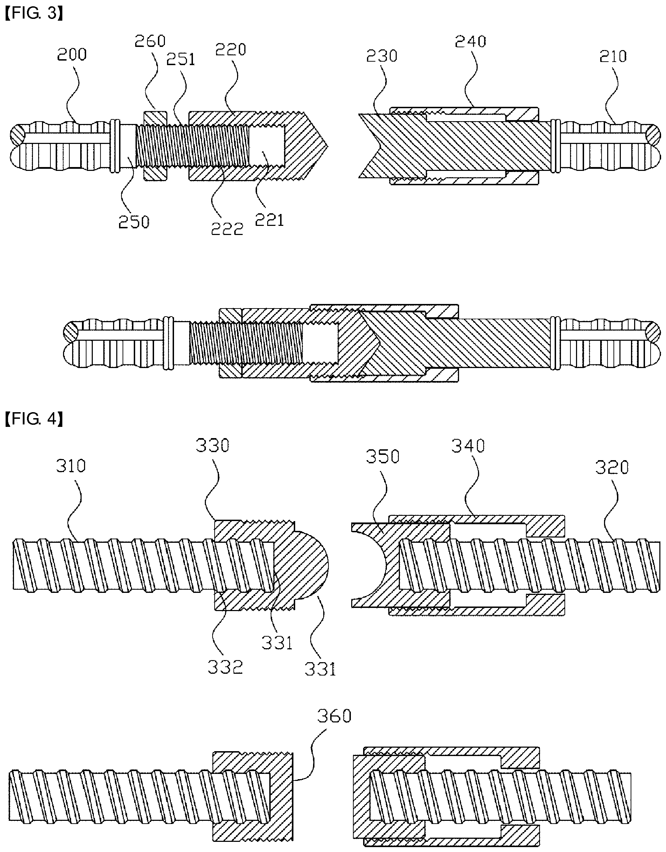

Next, FIG. 3 is a cross-sectional view illustrating connection of reinforcing bars according to the present invention in detail.

The present invention includes a first reinforcing bar 200, a second reinforcing bar 210, a first binding end member 220, a second binding end member 230, a fastening socket 240, a middle binding member 250, and a lock nut body 260.

In the first example, not forming part of the claimed subject matter, there are no adjustable spaces in either end portion when reinforcing bars that are prearranged and cannot be moved are joined, and thus fastening of the first binding end member 220 and the second binding end member 230 becomes difficult when end portions of the first binding end member 220 and the second binding end member 230 cannot be made to abut each other. Consequently, according to the invention, the middle binding member 250 is interposed between the first binding end member 220 and the reinforcing bar or between the second binding end member 230 and the reinforcing bar or the middle binding member 250 is interposed between the first binding end member 220 and the second binding end member 230 to adjust a joining length of the first reinforcing bar 200 and the second reinforcing bar 210 when needed.

First, for example, to describe a case in which the middle binding member 250 is interposed between the first reinforcing bar 200 and the first binding end member 220, the middle binding member 250 is a longitudinal member in which one end portion is bound to an end portion of the first reinforcing bar 200. That is, when reinforcing bars to be joined are prearranged and end portion shapes of the first binding end member 220 and the second binding end member 230 cannot abut each other because intervals between reinforcing bars in coupling reinforcing bar cages are too large or non-uniform, or when a construction error of arranged reinforcing bars occurs, adjusting a position of the first binding end member 220 by connecting it to the middle binding member 250 becomes possible. When coupling by the fastening socket 240 is completed after the position adjustment is completed, the lock nut body 260 is fastened to fix the position of the first binding end member 220.

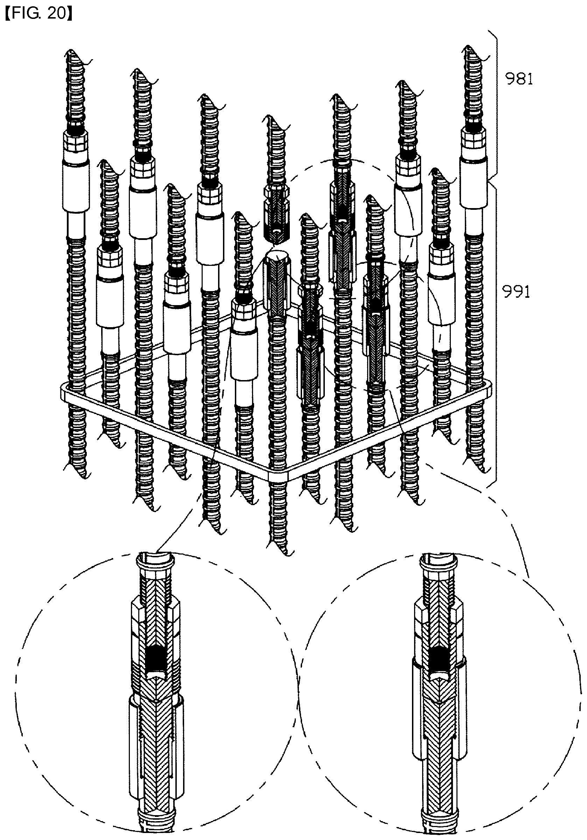

In addition, referring to FIG. 20, for example, when an upper reinforcing bar cage which is a prefabricated reinforcing bar network is fastened to a lower reinforcing bar cage, the upper reinforcing bar cage formed of main reinforcing bars having the first binding end member 220 bound to end portions is lowered by lifting equipment corresponding to the lower reinforcing bar cage and end portions, and first, reinforcing bars having both end portions abutting to be fitted are fastened by lifting the fastening socket 240, the middle binding member 250 is moved back and forth in reinforcing bars in which an interval is generated between end portions of the first binding end member 220 and the second binding end member 230 to adjust the end portion shapes of the first binding end member 220 and the second binding end member 230 to abut each other, and remaining reinforcing bars are integrally fastened by lifting the fastening socket 240 and locked by the lock nut body 260, thereby completing the fastening between the upper and lower reinforcing bar cages.

The lock nut body 260 may have a transverse cross-sectional surface formed in a circular or polygonal shape to form a hexagon like a commonly used nut or a polygon with more than six angles. The end portion of the first binding end member 220 corresponding to the middle binding member 250 may be formed as in one case selected from a case in which a cross-sectional shape from the end portion surface up to a predetermined distance is a circular shape or a polygonal shape, and a case in which grip surfaces which are one pair or multiple pairs of flat surfaces are formed. Accordingly, fastening of the lock nut may be facilitated since the first binding end member 220 may be gripped more firmly when the lock nut is fastened, and an initial slip of reinforcing bars when they are tensioned may be prevented by the lock nut body 260 being fastened to come in close contact with the first binding end member 220. Preferably, the transverse cross-sectional surface may form a polygon with more than six angles to facilitate tool gripping and increase the transverse cross-sectional area above that of a hexagon.

The middle binding member 250 may be interposed between the second binding end member 230 and the second reinforcing bar 210 or disposed at both sides of the first binding end member 220 and the second binding end member 230 to adjust the joining length corresponding to an interval between reinforcing bars. That is, when the middle binding member 250 is disposed at both of the sides, the joining length may be adjusted within a more extended range. The fastening socket 240 has the same configuration as in the first example. Next, FIG. 4 is a cross-sectional view illustrating connection of reinforcing bars according to a third example not forming part of the claimed subject matter in detail. The third example includes a first threaded joint type reinforcing bar 310, a second threaded joint type reinforcing bar 320, a first binding end member 330, a second binding end member 350, and a fastening socket 340.

Although there may be various embodiments for binding the first binding end member 330 to a reinforcing bar, a female screw portion 332 for accommodating a screw shape of the threaded joint type reinforcing bar may be disposed at the first binding end member 330 when a reinforcing bar to be bound is a threaded joint type reinforcing bar to enable binding between the threaded joint type reinforcing bar and the first binding end member 330.

Thus, joining of a threaded joint type reinforcing bar becomes possible by only forming an accommodation groove 331 at the first binding end member 330 and the female screw portion 332 helically coupled to the first threaded joint type reinforcing bar 310 and the second threaded joint type reinforcing bar 320 at an inner surface of the accommodation groove 331.

According to a configuration of a reinforcing bar connector using a screw type sleeve with respect to a conventional, well-known threaded joint type reinforcing bar, a configuration in which a threaded joint of a threaded joint type reinforcing bar is coupled to an inner surface of a sleeve for a first threaded joint type reinforcing bar and a second threaded joint type reinforcing bar to be fastened is disclosed. An end portion shape of the sleeve is a shape in which one end portion in the axial direction of one sleeve is formed of a tapered protrusion portion protruding in a tapered form, and one end portion in the axial direction of another sleeve is formed of a tapered recessed groove portion formed of a recessed groove in the form of a funnel into which the tapered protrusion portion is tightly fitted. Thus, in the present example, instead of the shape of the tapered protrusion portion, an end portion shape of the first binding end member 330 is formed of a configuration forming any one selected from a cylinder, a polygonal pyramid, a truncated polygonal pyramid, a rounded polygonal pyramid, a polygonal column, a cut spherical shape 331, a cut elliptical-spherical shape protruding from a center in the longitudinal direction, and a flat surface 360 and an embossed surface perpendicular to the longitudinal direction.

The end portion is formed of a cylinder, a polygonal pyramid, a truncated polygonal pyramid, a rounded polygonal pyramid, a polygonal column, the cut spherical shape 331, a cut elliptical-spherical shape, or a flat surface and an embossed surface perpendicular to the longitudinal direction, and the fastening socket 340 has the same configuration as in the first example.

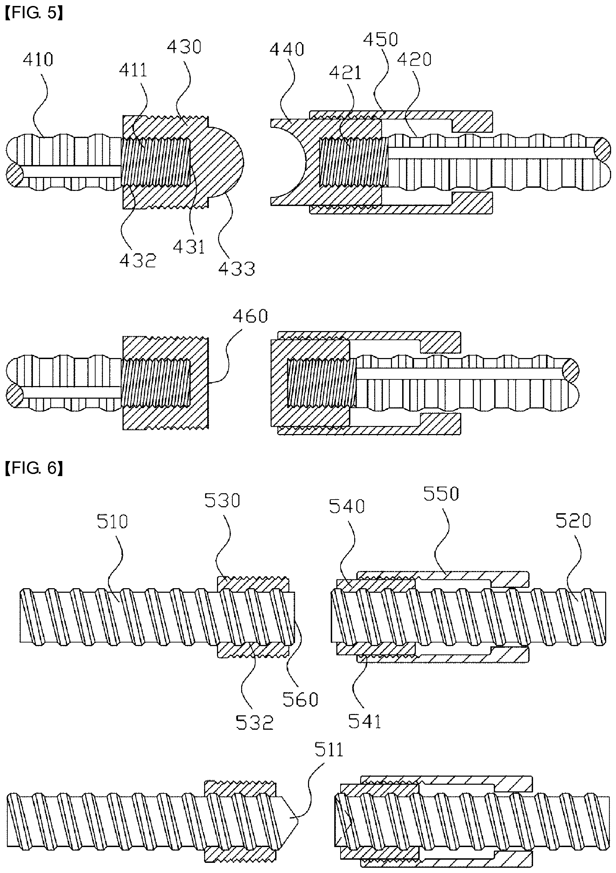

Next, FIG. 5 is a cross-sectional view illustrating connection of reinforcing bars according to a fourth example, not forming part of the claimed subject matter, in detail.

The fourth example includes a first reinforcing bar 410, a second reinforcing bar 420, a first binding end member 430, a second binding end member 440, and a fastening socket 450.

In this example, the first reinforcing bar 410 and the second reinforcing bar 420 are reinforcing bars in which male screw portions 411 and 421 are respectively formed at end portions to be coupled by a screw method, an accommodation groove 431 for accommodating the end portion of the reinforcing bar at which the male screw portion 411 is formed is formed at the end portion of the first binding end member 430, and a female screw portion 432 helically coupled to the male screw portion 411 formed at the end portion of the first reinforcing bar 410 is formed at the accommodation groove 431. Thus, joining of the reinforcing bar in which the male screw portion 411 is formed at the end portion becomes possible by only forming the accommodation groove 431 at the first binding end member 430 and the female screw portion 432 at an inner surface of the accommodation groove 431.

According to a configuration of a reinforcing bar connector using a screw type sleeve with respect to a conventional, well-known reinforcing bar in which a screw thread is processed at an end portion, a configuration in which a first reinforcing bar and a second reinforcing bar are reinforcing bars at which male screw portions are formed at end portions and the male screw portions formed at the end portions of the reinforcing bars are coupled to inner surfaces of a sleeve to be helically fastened is disclosed. An end portion shape of the sleeve is a shape in which one end portion in the axial direction of one sleeve is formed of a tapered protrusion portion protruding in a tapered form, and one end portion in the axial direction of another sleeve is formed of a tapered recessed groove portion formed of a recessed groove in the form of a funnel into which the tapered protrusion portion is tightly fitted. Thus, in the present example, instead of the shape of the tapered protrusion portion, an end portion shape of the first binding end member 430 is formed of a configuration forming any one selected from a cylinder, a polygonal pyramid, a truncated polygonal pyramid, a rounded polygonal pyramid, a polygonal column, a cut spherical shape 433, a cut elliptical-spherical shape protruding from a center in the longitudinal direction, and a flat surface 460 and an embossed surface perpendicular to the longitudinal direction.

The end portion is formed of a cylinder, a polygonal pyramid, a truncated polygonal pyramid, a rounded polygonal pyramid, a polygonal column, a cut spherical shape, a cut elliptical-spherical shape, or a flat surface and an embossed surface perpendicular to the longitudinal direction, and the fastening socket 450 has the same configuration as in the first example.

Next, FIG. 6 is a cross-sectional view illustrating connection of reinforcing bars according to a fifth example, not forming part of the claimed subject matter, in detail.

The fifth example includes a first threaded joint type reinforcing bar 510, a second threaded joint type reinforcing bar 520, a first binding end member 530, a second binding end member 540, and a fastening socket 550, and detailed configurations of the first binding end member 530 and the second binding end member 540 are different from the embodiment according to this invention.

That is, the first threaded joint type reinforcing bar 510 has a configuration in which a female screw portion 532 for coupling a threaded joint type reinforcing bar helically coupled to an end portion of the first threaded joint type reinforcing bar 510 is formed by penetrating an inner surface in the longitudinal direction for the first threaded joint type reinforcing bar to penetrate the first binding end member 530 to protrude toward the second threaded joint type reinforcing bar 520, and a male screw portion for coupling the fastening socket 550 is formed in the longitudinal direction at an outer surface.

In addition, with respect to the second threaded joint type reinforcing bar 520 facing the first threaded joint type reinforcing bar 510, a female screw portion for coupling a threaded joint type reinforcing bar helically coupled to an end portion of the second threaded joint type reinforcing bar 520 is formed by penetrating an inner surface in the longitudinal direction for the second threaded joint type reinforcing bar 520 to penetrate the second binding end member 540 to protrude toward the first threaded joint type reinforcing bar 510, and one end portion in the axial direction is perpendicular to the longitudinal direction at an outer surface to have one or a plurality of steps with which a locking step of the fastening socket comes in close contact to be supported.

In addition, as in the first example, the fastening socket 550 formed in a hollow shape opened in the longitudinal direction to extend in the longitudinal direction in order to surround and accommodate an outer surface of the second binding end member 540 and an outer surface of the first binding end member 530, having a female screw portion 541 for coupling the fastening socket 550 helically coupled to the male screw portion for coupling the fastening socket 550 formed in the longitudinal direction at an inner surface, and having one or a plurality of locking steps locked to a step of the second binding end member 540 is formed, and fastening becomes possible by the fastening socket 550 moving from the second binding end member 540 toward the first binding end member 530.

In the fastening process, first, the first binding end member 530 is penetrated by insertion of the first threaded joint type reinforcing bar 510, and the second binding end member 540 is penetrated by insertion of in the second threaded joint type reinforcing bar 520 while the fastening socket 550 is penetrated by insertion of the second threaded joint type reinforcing bar 520 in advance in a direction in which the fastening socket extends toward the first reinforcing bar. Thus, protruding end portions of the first threaded joint type reinforcing bar 510 and the second threaded joint type reinforcing bar 520 may tightly support each other.

Then, the fastening socket 550 that is penetrated by insertion is moved toward the first threaded joint type reinforcing bar 510 and rotated in the fastening direction to allow the locking step of the fastening socket 550 to be tightly supported by the step of the second binding end member 540, and is rotated in the fastening direction such that an end portion surface of the first threaded joint type reinforcing bar 510 and an end portion surface of the second threaded joint type reinforcing bar 520 abut and tightly support each other.

The first binding end member 530 and the second binding end member 540 are integrally fastened by the fastening socket 550 to complete mechanical joining of the first threaded joint type reinforcing bar 510 and the second threaded joint type reinforcing bar 520.

Accordingly, when the fastening is completed, the end portions of the first threaded joint type reinforcing bar 510 and the second threaded joint type reinforcing bar 520 tightly support each other, thereby enabling joining of reinforcing bars that tightly support each other stably.

The end portion surfaces of the first threaded joint type reinforcing bar 510 and the second threaded joint type reinforcing bar 520 that tightly support each other may be formed in various shapes. The end portion shapes of the first threaded joint type reinforcing bar 510 and the second threaded joint type reinforcing bar 520 have the same configuration as the examples of the end portion shapes of the first binding end member 530 and the second binding end member 540 of the first example.

That is, the end portion shape of the first threaded joint type reinforcing bar 510 may be any one selected from a cone 511, a truncated cone, a rounded cone, a cylinder, a polygonal pyramid, a truncated polygonal pyramid, a rounded polygonal pyramid, a polygonal column, a cut spherical shape, and a cut elliptical-spherical shape protruding from the center in the longitudinal direction, and a flat surface 560 and an embossed surface perpendicular to the longitudinal direction, and in a selected example, a possible processed shape of the end portions of the first threaded joint type reinforcing bar 510 and the second threaded joint type reinforcing bar 520 is a shape that may be cut in a processing method using rotational motion, and may be the shape of a cone, a truncated cone, a cut sphere, and a cut elliptical sphere.

Any one of a case in which the end portion shape of the second threaded joint type reinforcing bar 520 is an accommodation unit of the end portion shape of the first threaded joint type reinforcing bar 510 formed in the same shape as the end portion shape of the first threaded joint type reinforcing bar 510 and a case in which the end portion shape of the first threaded joint type reinforcing bar 510 and the end portion shape of the second threaded joint type reinforcing bar 520 are changed with each other may be realized.

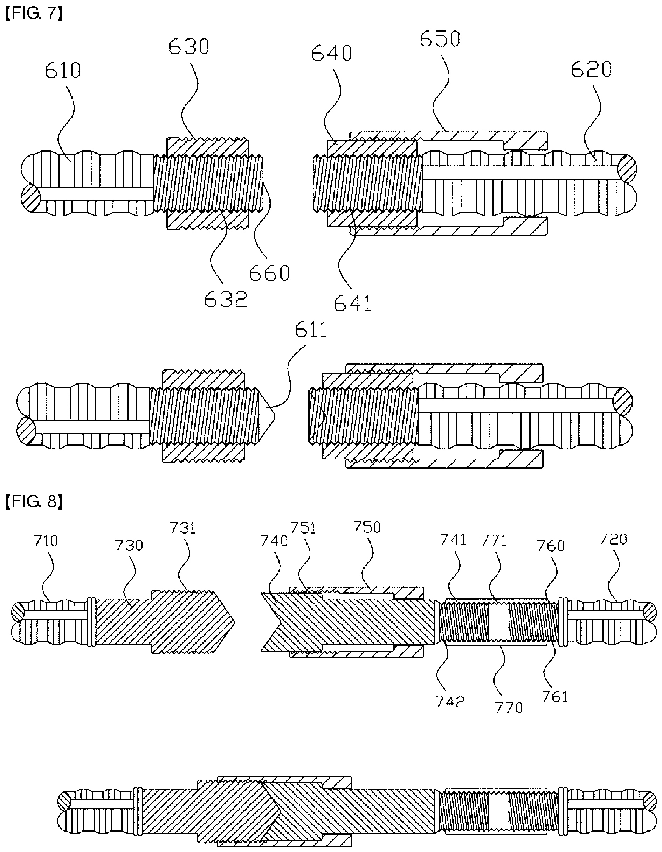

Preferably, the end portion of the first threaded joint type reinforcing bar 510 is formed in the shape of a cone or a truncated cone, and the end portion of the second threaded joint type reinforcing bar 520 forms an accommodation unit of that shape to allow the shape to be tightly fitted thereto. That is, since an end portion area of the first threaded joint type reinforcing bar 510 becomes a space that is narrower than an end portion area of the first binding end member 530, due to the narrowness of the space, a shape that may be easily processed and may easily abut the accommodation unit is preferably selected as the shape of the end portion. The embossed surface has the same configuration as in the first example. The fastening socket 550 has the same configuration as in the first example. Next, FIG. 7 is a cross-sectional view illustrating connection of reinforcing bars according to a sixth example, not forming part of the claimed subject matter, in detail.

Next, the sixth example includes a first reinforcing bar 610, a second reinforcing bar 620, a first binding end member 630, a second binding end member 640, and a fastening socket 650, and the first reinforcing bar 610 and the second reinforcing bar 620 are reinforcing bars in which male screw portions are formed at end portions, unlike the fifth example.

That is, the first reinforcing bar 610 has a configuration in which a female screw portion 632 for coupling a reinforcing bar having a male screw portion formed at an end portion helically coupled to an end portion of the first reinforcing bar 610 is formed by penetrating an inner surface in the longitudinal direction for the first reinforcing bar to penetrate the first binding end member 630 to protrude toward the second reinforcing bar 620, and a male screw portion for coupling the fastening socket 650 is formed in the longitudinal direction at an outer surface.

In addition, with respect to the second reinforcing bar 620 facing the first reinforcing bar 610, a female screw portion for coupling a reinforcing bar having a male screw portion formed at an end portion helically coupled to an end portion of the second reinforcing bar 620 is formed by penetrating an inner surface in the longitudinal direction for the second reinforcing bar 620 to penetrate the second binding end member 640 to protrude toward the first reinforcing bar 610, and one end portion in the axial direction is perpendicular to the longitudinal direction at an outer surface to have one or a plurality of steps with which a locking step of the fastening socket is tightly supported.

In addition, as in the first example, the fastening socket 650 formed in a hollow shape opened in the longitudinal direction to extend in the longitudinal direction in order to surround and accommodate an outer surface of the second binding end member 640 and an outer surface of the first binding end member 630, having a female screw portion 641 for coupling the fastening socket 650 helically coupled to the male screw portion for coupling the fastening socket 650 of the first binding end member 630 formed in the longitudinal direction at an inner surface, and having one or a plurality of locking steps locked to a step of the second binding end member 640 is formed, and fastening becomes possible by the fastening socket 650 moving from the second binding end member 640 toward the first binding end member 630.

In the fastening process, first, the first binding end member 630 is penetrated by insertion of the first reinforcing bar 610, the second binding end member 640 is penetrated by insertion of the second reinforcing bar 620, while the fastening socket 650 is penetrated by insertion of the second reinforcing bar 620 in advance in a direction in which the fastening socket extends toward the first reinforcing bar. Thus, protruding end portions of the first reinforcing bar 610 and the second reinforcing bar 620 may abut and tightly support each other.

Then, the fastening socket 650 that is penetrated by insertion is moved toward the first reinforcing bar 610 and rotated in the fastening direction to allow the locking step of the fastening socket 650 to be tightly supported by the step of the second binding end member 640, and is rotated in the fastening direction such that an end portion surface of the first reinforcing bar 610 and an end portion surface of the second reinforcing bar 620 are tightly supported by each other.

The first binding end member 630 and the second binding end member 640 are integrally fastened by the fastening socket 650 to complete mechanical joining of the first reinforcing bar 610 and the second reinforcing bar 620.

Accordingly, when the fastening is completed, the end portions of the first reinforcing bar 610 and the second reinforcing bar 620 tightly support each other, thereby enabling joining of reinforcing bars that tightly support each other stably.

The end portion surfaces of the first reinforcing bar 610 and the second reinforcing bar 620 that tightly support each other may be formed in various shapes. The end portion shapes of the first reinforcing bar 610 and the second reinforcing bar 620 have the same configuration as the examples of the end portion shapes of the first binding end member 630 and the second binding end member 640 of the first example. That is, the end portion shape of the first reinforcing bar 610 may be any one selected from a cone 511, a truncated cone, a rounded cone, a cylinder, a polygonal pyramid, a truncated polygonal pyramid, a rounded polygonal pyramid, a polygonal column, a cut spherical shape, and a cut elliptical-spherical shape protruding from the center in the longitudinal direction, and a flat surface 560 and an embossed surface perpendicular to the longitudinal direction, and in a selected example, a possible processed shape of the end portions of the first reinforcing bar 610 and the second reinforcing bar 620 is a shape that may be cut in a processing method using rotational motion, and may be the shape of a cone, a truncated cone, a cut sphere, and a cut elliptical sphere.

Any one of a case in which the end portion shape of the second reinforcing bar 620 is an accommodation unit of the end portion shape of the first reinforcing bar 610 formed in the same shape as the end portion shape of the first reinforcing bar 610 and a case in which the end portion shape of the first reinforcing bar 610 and the end portion shape of the second reinforcing bar 620 are changed with each other may be realized.

Preferably, the end portion of the first reinforcing bar 610 is formed in the shape of a cone or a truncated cone, and the end portion of the second reinforcing bar 620 forms an accommodation unit of that shape to allow the shape to be tightly fitted thereto. That is, since an end portion area of the first reinforcing bar 610 becomes a space that is narrower than an end portion area of the first binding end member 630, due to the narrowness of the space, a shape that may be easily processed and may easily abut the accommodation unit is preferably selected as the shape of the end portion. The embossed surface has the same configuration as in the first example. The fastening socket 650 has the same configuration as in the first example. The fifth example and the sixth example are preferable configurations when joining of reinforcing bars is performed individually, do not require a lock nut body since a portion to be joined by the lock nut body does not have to be fastened, and an initial slip from a state in which reinforcing bars are joined is completely eliminated because the end portions of the first reinforcing bar 610 and the second reinforcing bar 620 abut and tightly support each other using only the fastening socket 650. That is, since the end portions that abut and tightly support each other are integrally connected by the fastening socket while tightly supporting each other, there is no movement of the reinforcing bars and an initial slip is completely eliminated.

Next, FIG. 8 is a cross-sectional view illustrating connection of reinforcing bars according to a seventh example, not forming part of the claimed subject matter, in detail. The seventh example includes a first reinforcing bar 710, a second reinforcing bar 720, a first binding end member 730, a second binding end member 740, a middle binding member 760, a fastening socket 750, and a connection socket 770, and detailed configurations of the first binding end member 730 and the second binding end member 740 are different from the embodiment according to this invention.

The middle binding member 760 may be interposed at any one of a portion between the first reinforcing bar 710 and the first binding end member 730 and a portion between the second reinforcing bar 720 and the second binding end member 740, or may be interposed at both sides.

First, for example, to describe a configuration in which the middle binding member 760 is interposed between the second reinforcing bar 720 and the second binding end member 740, the middle binding member 760 is bound to the end portion of the second reinforcing bar 720, a male screw portion 761 for coupling the middle binding member 760 for helically coupling the middle binding member 760 and the connection socket 770 is formed in a predetermined section from one end portion to the other end portion of the middle binding member 760, a connection unit 741 is formed at the other end portion of the second binding end member 740 corresponding to the middle binding member 760 within a predetermined section from the other end portion in order to helically couple the connection socket 770, a male screw portion 742 for coupling the connection socket 770 for helical coupling to the connection socket 770 is formed in a section of the connection unit 741, the connection socket 770, which is a longitudinal member and a hollow body having one side and the other side opened, that connects the connection unit 741 to the middle binding member 760 is disposed to connect the second binding end member 740 and the middle binding member 760 at which the male screw portions 761 and 742 are respectively formed, and a female screw portion 771 helically coupled to the male screw portion 742 for coupling the connection socket 770 and the male screw portion 761 for coupling the middle binding member 760 is formed at an inner surface of the connection socket 770, thereby enabling coupling to the middle binding member 760 by rotating the connection socket 770 in the fastening direction.

Although the seventh example is a configuration in which the middle binding member 760 is interposed as in the embodiment (the second) according to this invention, the second embodiment is a configuration in which an accommodation groove and a female screw portion are formed at the first binding end member 730 and the second binding end member 740 to accommodate the middle binding member 760, while in the seventh example, a configuration in which the connection unit 741 and a male screw portion are formed at the first binding end member 730 and the second binding end member 740 is formed, unlike the second embodiment.

According to this example, a configuration in which the connection unit 741 and a male screw portion for coupling the connection socket 770 formed at the connection unit 741 are formed at the first binding end member 730 and the second binding end member 740 is formed such that the end portion shapes of the first binding end member 730 and the second binding end member 740 may be adjusted to abut each other within a more distant range than when the joining length is adjusted as in the second embodiment, and a length of a reinforcing bar may be adjusted in a more extended range and a construction error may be absorbed by the connection unit 741.

The end portion shapes of the first binding end member 730 and the second binding end member 740 that tightly support each other may have various shapes and have the same configuration as the examples of the end portion shapes of the first binding end member 730 and the second binding end member 740 of the first example. According to the first to seventh examples, although there may be various examples of binding of the first reinforcing bars 100, 200, and 710 and the first binding end members 120, 220, and 730, binding of the second reinforcing bars 110, 210, and 720 and the second binding end members 130, 230, and 740, binding of the first reinforcing bars 200 and 710 and the middle binding members 250 and 760, and binding of the second reinforcing bars 210 and 720 and the middle binding members 250 and 760, examples using welding, according to this invention, will be described.

For example, a configuration of binding by any one selected from friction welding, linear friction welding, arc stud welding, butt welding, ultrasonic vibration welding, resistance welding, plasma welding, electronic beam welding, laser welding, high-frequency welding, and argon welding may be considered.

Hereinafter, to describe the binding of the first reinforcing bar and the first binding end member as an example, first, friction welding is a method in which, when two metal materials are clamped by a friction welder while one side is fixed and the other side is frictionally rotated back and forth at a high speed of 2,000 rpm, binding of end portions becomes possible due to high-temperature heat of 600 to 1,200 °C generated at the frictional surface, and then the rotation is suddenly stopped instantaneously and the two materials are pressed with a strong pressure to bind the two materials. When the first binding end member is rapidly rotated while the first reinforcing bar is clamped to rotate an end portion to be bound by bringing the end portion to be bound in close contact with an end portion of the first reinforcing bar to create friction with the end portion of the first reinforcing bar, and binding of the end portion becomes possible due to the high-temperature heat, the first binding end member is pressed toward the first reinforcing bar in order to bind the first binding end member to the first reinforcing bar. In the actual binding, the end portion to be bound is preheated to easily reach the high-temperature state, and natural binding is induced by pressing the first binding end member even in a process of inducing the high-temperature state.

Linear friction welding is a method of binding two materials to be bound by linearly moving the materials back and forth, and this method overcomes a weakness of friction welding in which any one of the contact cross-sections needs to be circular. This method is a useful friction binding method in binding to the first reinforcing bar when the shape of the transverse cross-section of the first binding end member is polygonal instead of circular in the present invention.

The friction welding and the linear friction welding are high-phase binding techniques in which energy required for binding is obtained by mechanical means.

Next, the arc stud welding method is a method in which binding is performed by generating an arc between a front end of a stud bolt or a round bar, which is a component, and a base material and pressing when welded portions are molten. An arc type and a condenser type (C.D Type) are used. The arc type is useful in bolt welding or pin welding because it mostly uses a power supply source of 6-phase control, and the condenser type performs pin welding mostly using a single-phase power supply device using a silicon controlled rectifier (SCR). In the actual binding, the base material is grounded to a negative electrode and a wire is connected to a positive electrode to supply power and perform welding. That is, the first binding end member may substitute a stud member and ground a negative electrode to the first binding end member as a stud and ground a positive electrode to the first reinforcing bar to receive a current required for welding from a stud welder in order to generate an arc by slightly spacing the first binding end member while the welding current from the welder is conducted after bringing an end portion of the first binding end member in contact with an end portion of the first reinforcing bar, and when melting occurs due to the high-temperature arc, press the first binding end member again to enable welding of the molten portion.

Referring to FIG. 18, to facilitate the arc generation above, a groove may be formed at a center of an end portion surface of the first binding end member to be welded for an ignition tip 970 that performs ignition to ignite an arc to be inserted and installed. The ignition tip 970 is inserted and installed at the center of the end portion surface of the first binding end member to facilitate the arc generation even when the binding end member is wide, thereby obtaining a high-quality welding surface. That is, when the groove is formed at the center of the end portion surface of the binding end member to be welded and the ignition tip 970 that performs ignition to ignite an arc is inserted and installed at the center of the end portion surface of the binding end member, binding occurs due to melting from the central portion due to the ignition of the arc generation from the center of the end portion surface even when the binding end member is wide, thereby obtaining a high-quality welding surface. Also, a ceramic ferrule may be installed to surround the end portion surface to be welded in order to improve welding quality.

Description of the binding of the first binding end member and the first reinforcing bar using butt welding, ultrasonic vibration welding, resistance welding, plasma welding, electronic beam welding, laser welding, high-frequency welding, and argon welding will be omitted since those are technical configurations that are obvious to those of ordinary skill in the field of welding and joining of two base materials.

However, it is preferable that the end portion surface to be bound including the end portion surface of the first binding end member and the end portion surface of the first reinforcing bar be precisely cut or have a cut end portion surface cut-processed using a saw tool and a processing tool capable of shearing to improve welding quality of a bound surface when binding by welding regardless of which welding method is selected from the above welding methods.

In addition, according to the present invention, end portions of the first binding end members 120, 220, 330, 430, 530, 630, and 730 and the second binding end members 130, 230, 350, 440, 540, 640, and 740 are bound according to the above-mentioned embodiment and are fastened by the fastening sockets 141 and 751 even when sizes of reinforcing bars to be joined are different, i.e. when sizes of the first reinforcing bars 100, 200, 410, 610, and 710 and the second reinforcing bars 110, 210, 420, 620, and 720 or sizes of the first threaded joint type reinforcing bars 310 and 510 and the second threaded joint type reinforcing bars 320 and 520 are different, and even with respect to a method of coupling reinforcing bars of different types, thus enabling various types of reinforcing bars to be joined.

Furthermore, with respect to a bar material including a round bar capable of not only joining reinforcing bars but also joining binding portions, the first binding end members 120, 220, and 730, the second binding end members 130, 230, and 740, and the middle binding members 250 and 760 are to an end portion of the bar material including a round bar such that joining of abutting bar materials having end portions facing each other becomes possible, in accordance with embodiments.

For example, joining of adjacent bar materials having end portions facing each other becomes possible when the first binding end member 120 and the second binding end member 130 are bound to the end portions of the bar materials in the first example, when the second binding end member 230 at one side and the middle binding member 250 at the other side are bound to the end portions of the bar materials in the second embodiment, when bar materials having screws formed at end portions are helically coupled to the first binding end member 430 and the second binding end member 440 in the fifth example, and when the first binding end member 730 at one side and the middle binding member 760 at the other side are bound to the end portions of the bar materials in the seventh example. In the third to sixth examples, when the first binding end member 330 and the second binding end member 350 and the first threaded joint type reinforcing bar 310 and the second threaded joint type reinforcing bar 320 are respectively helically coupled, when the first binding end member 430 and the second binding end member 440 and the first reinforcing bar 410 and the second reinforcing bar 420 having male screw portions formed at end portions are respectively helically coupled, when the first binding end member 530 and the second binding end member 540 and the first threaded joint type reinforcing bar 510 and the second threaded joint type reinforcing bar 520 are respectively coupled by being penetrated by insertion, or when the first binding end member 630 and the second binding end member 640 and the first reinforcing bar 610 and the second reinforcing bar 620 having male screw portions formed at end portions are helically coupled, in order to facilitate gripping of a fastening tool, the transverse cross-sections of the first binding end members 330, 430, 530, and 630 and the second binding end member 350, 440, 540, and 640 may not be maintained in a circular shape but made to form a polygonal shape up to a predetermined section from an end portion surface or as a whole, one pair or multiple pairs of grip surfaces forming parallel surfaces may be disposed at positions facing each other, or knurl processing or spline processing may be performed on the predetermined section or as a whole.

For example, in the third example, when the transverse cross-section of the first binding end member 330 is formed in a polygonal shape or one or more pairs of grip surfaces are disposed to facilitate gripping of a tool when it is helically coupled to the first threaded joint type reinforcing bar 310, the transverse cross-section may be formed in a polygonal shape only up to approximately 10 to 15 mm from an end portion surface toward the first threaded joint type reinforcing bar 310 or only up to a point at which the male screw portion for coupling the fastening socket initially begins or one or more pairs of grip surfaces may be disposed.

Likewise, in the fourth example, when the transverse cross-section of the first binding end member 430 is formed in a polygonal shape to facilitate gripping of a tool when it is helically coupled to the first reinforcing bar 410, the transverse cross-section may be formed in a polygonal shape only up to approximately 10 to 15 mm from an end portion surface toward the first reinforcing bar 410 or only up to a point at which the male screw portion for coupling the fastening socket initially begins or one or more pairs of grip surfaces may be disposed.

In addition, even when outer surfaces of the second binding end members 350, 440, 540, and 640 form a polygonal shape, the transverse cross-sectional shapes of the second binding end members 350, 440, 540, and 640 are preferably circular in a section up to a predetermined distance, e.g. approximately 10 to 15 mm, toward the first reinforcing bar from steps of the second binding end members or surfaces forming the steps. This is because an area that is tightly supported when it is fastened and joined is the largest when the transverse cross-section of the locking step of the fastening socket forms a circular shape and the transverse cross-section of the step with respect to the locking step forms a circular shape and the two are brought in close contact, and thus a cross-sectional area that tightly supports the shape of the locking step is made larger than in an example in which a polygonal shape is formed to enable firm coupling in fastening by pressing, and smooth rotation of the fastening socket in the fastening tightening screw direction is possible when the fastening socket is fastened.

In addition, in the first to seventh examples, in formation of outer surfaces of the fastening sockets 140, 240, 340, 450, 550, 650, and 750 and the connection socket 770 according to the seventh example, any case selected from a case in which the transverse cross-sectional shape is spline-processed, knurl-processed, circular or polygonal and a case in which one pair or multiple pairs of grip surfaces facing each other are disposed, thereby facilitating gripping of a tool or rotating when fastening, may be adopted. The one pair or multiple pairs of grip surfaces facing each other are parallel surfaces by which a tool can be easily used for fastening, and they may be formed at desired positions at the outer surfaces of the fastening sockets 140, 240, 340, 450, 550, 650, and 750 or the connection socket 770.

For example, in the case of the fastening sockets 140, 240, 340, 450, 550, 650, and 750, the spline processing and the knurl processing may be performed on entire outer surfaces of the fastening sockets 140, 240, 340, 450, 550, 650, and 750, or only up to a predetermined distance, e.g. approximately 10 mm to 15 mm, beginning from end portion surfaces of the fastening sockets 140, 240, 340, 450, 550, 650, and 750 toward the first reinforcing bar. Also, even when the polygonal transverse cross-sectional shape and one or more pairs of grip surfaces are disposed, the spline processing and the knurl processing may be performed on the entire outer surfaces of the fastening sockets 140, 240, 340, 450, 550, 650, and 750, or only up to a predetermined distance, e.g. approximately 10 mm to 15 mm, from end portion surfaces of the fastening sockets 140, 240, 340, 450, 550, 650, and 750 toward the second reinforcing bar corresponding to outer surfaces of sections where the locking steps are formed.

In addition, in each of the examples and embodiments of the present invention including the male screw portions 121, an 731 and the female screw portions 141, 541, 641, and 751 for coupling the fastening sockets, the male screw portions 251 and 761 and the female screw portion 222 for coupling the middle binding members and a screw of the lock nut body 260, the male screw portion 742 for coupling the connection socket of the first binding end member and the second binding end member and the female screw portion 771 at the inner surface of the connection socket, screw threads included in elements of the described examples and the present invention may be formed with screws having one or more screw threads for prevention of loosening and prompt fastening. However, it is preferable that a double-thread screw be used because a triple-thread screw may loosen under tensioned.

The form of a screw may be any one form selected from a triangular screw, a quadrangular screw, an elliptical screw, and a round screw, and a class of a screw is any one selected from first class which is a precise level, second class which is a middle level, and third class which is a rough level, and although second-class and third-class screws are used conventionally to form couplers because a tightening work is not easy when the coupler is formed with a first-class screw, the first-class screw may be used in the socket fastening method of the present invention due to the technical configuration formed to facilitate screw fastening of screw threads. Also, a direction of a screw may be selected from a left screw and a right screw depending on a fastening method.

The first binding end members 120, 220, 330, 430, 530, 630, and 730, the second binding end members 130, 230, 350, 440, 540, 640, and 740, and the middle binding members 250 and 760 may be manufactured by any one method selected from casting, forging, cut-processing, and a three-dimensional printing formation method.

Description of casting and forging methods will be omitted since those are technical configurations obvious to those of ordinary skill in methods of forming metal materials.

Meanwhile, referring to FIG. 9, in the cut-processing, in manufacturing the accommodation unit of the first binding end member and the second binding end member by cutting using a bit in lathe processing, for example, processing is difficult due to interference of the bit which is a tool when a shape of the accommodation unit is a shape having a cross-sectional area gradually decreasing toward a vertex, such as a cone. To solve this, a recessed groove may be provided at a central portion of the accommodation unit to perform cut processing while avoiding interference of a tool using a processing recessed groove 975.

In addition, the three-dimensional printing formation method is a method of completing formation of a three-dimensional form by stacking cross-sections of a material using three-dimensional cross-sectional shape data of the three-dimensional form. About twenty formation methods including formation methods using a three dimensional printing (3DP) system, a selective laser sintering (SLS) system, and a stereo lithography apparatus (SLA) system are known.

Particularly, in the SLS system, special metal powders, which currently include 400-series stainless and 300-series stainless powders, having a polymer binder thinly coated on a surface are used. A three-dimensional form is formed by a process of selectively radiating a laser beam to the applied metal powder to melt the coated polymer binder and fix the powder, and melting a bronze metal after a sintering heat treatment so that it permeates into a product. The first binding end member, the second binding end member, and the middle binding member of the present invention may also be manufactured by the 3D printing formation methods using a metal material.

The first binding end members 120, 220, 330, 430, 530, 630, and 730, the second binding end members 130, 230, 350, 440, 540, 640, and 740, the fastening sockets 140, 240, 340, 450, 550, 650, and 750, and the middle binding members 250 and 760 may be formed of a metal material, and the stiffness thereof may be improved by a heat treatment process after the first binding end members 120, 220, 330, 430, 530, 630, and 730, the second binding end members 130, 230, 350, 440, 540, 640, and 740, the fastening sockets 140, 240, 340, 450, 550, 650, and 750, and the middle binding members 250 and 760 are formed by the above-mentioned manufacturing methods.

Meanwhile, referring to FIG. 17, in the first, second, and seventh examples, when a longitudinal cross-sectional shape of any one selected from end portion shapes forming the cone 810, the truncated cone 820, the rounded cone 830, the cylinder, the polygonal pyramid, the truncated polygonal pyramid 840, the rounded polygonal pyramid, the polygonal column, the cut spherical shape, and the cut elliptical-spherical shape 850 is formed to have multiple stages, a contact area increases after the end portions of the first binding end members 120, 220, and 730 and the second binding end members 130, 230, and 740 are fitted to abut each other, thereby causing an effect of distributing stress from the axial compressive force.

When a longitudinal cross-sectional shape of any one selected from the end portion shapes forming the cylinder, the polygonal pyramid, the truncated polygonal pyramid 840, the rounded polygonal pyramid, the polygonal column, the spherical shape, and the cut elliptical-spherical shape 850 in the third to fourth examples, the end portion shape of the first threaded joint type reinforcing bar and the end portion shape of the second threaded joint type reinforcing bar in the fifth example, the end portion shape of the first reinforcing bar 610 and the end portion shape of the second reinforcing bar 620 forming the cone 810, the truncated cone 820, the rounded cone 830, the cylinder, the polygonal pyramid, the truncated polygonal pyramid 840, the rounded polygonal pyramid, the polygonal column, the cut spherical shape, and the cut elliptical-spherical shape in the sixth example, and the end portion shapes at which the male screw portion is formed at the end portion is formed to have multiple stages, the end portions of the first binding end members 330 and 430 and the second binding end members 350 and 440 are fitted to abut each other, the end portions of the first threaded joint type reinforcing bar 510 and the second threaded joint type reinforcing bar 520 are fitted to abut each other, and the end portions of the first reinforcing bar 610 and the second reinforcing bar 620 having the male screw portion formed at the end portion are fitted to abut each other, such that the contact area increases, thereby causing an effect of distributing stress from the axial compressive force.

Each of the stages forming the multiple stages may form any one angle selected from an acute angle, a right angle, and an obtuse angle such that the multiple stages are consecutive in a layered form in accordance with a selected shape of the longitudinal cross-section of the end portion shapes of the first binding end member and the second binding end member and form a shape that is gradient with a predetermined angle overall, or for example, a layered form in which multiple stages formed with right angles and obtuse angles sequentially continue may be formed.

In addition, although not illustrated, in the first to seventh examples, screw threads exposed to the outside without a protector may be corroded due to external influences in a process of moving materials to a construction site or supplying and managing materials at the construction site and may be recessed and damaged by an impact applied thereto. Accordingly, a case in which fastening itself is difficult due to the non-uniformity of screw threads during a construction work occurs, and depending on construction sites, screw threads become rusted when the materials are stored outdoors and directly exposed to the outside. To solve this, a protective cap for protecting screw threads may preferably cover at least one selected from the male screw portion for coupling the fastening socket of the first to seventh examples, the female screw portion for coupling the fastening socket, the male screw portion for coupling the middle binding member of the second embodiment and seventh example, the female screw portion for coupling the middle binding member, the female screw portion for coupling the threaded joint type reinforcing bar of the third example, the female screw portion for coupling the reinforcing bar in which the male screw portion is formed at the end portion of the fourth example, the female screw portion for coupling the threaded joint type reinforcing bar of the fifth example, the female screw portion for coupling the reinforcing bar in which the male screw portion is formed at the end portion of the sixth example, the male screw portion for connecting the connection socket of the seventh example, and the female screw portion at the inner surface of the connection socket.

The protective cap may have various embodiments. For example, with respect to the male screw portion, a shrinking member that shrinks by heat may cover a circumference of the male screw portion of each of the embodiments to be shrunk by applying heat such that screw threads are protected from damage due to corrosion and impact caused by external influences in a state in which the shrinking member comes in close contact with the male screw portion, a member which is a hollow body with one open side may be forcibly fitted into the male screw portion, female screw threads may be formed at an inner surface of the member which is a hollow body with one open side to cover the male screw portion of each of the embodiments with a cap member formed of a synthetic resin material or a rubber material to be helically coupled, or the protective cap may be formed by an insulating tape surrounding and adhering to the male screw portion. With respect to the female screw portion, a cap member having a boss being coupled to the female screw portion may be used. The boss may be forcibly fitted on the female screw portion, or the male screw portion helically coupled to the female screw portion may be formed at an outer surface of the boss to cover the female screw portion with a cap member formed of a synthetic resin material or a rubber material to be helically coupled in order to minimize external contact of the female screw portion and to block dust permeation and prevent rust.

The present invention is not limited to the above-mentioned embodiments, and technical configurations that may be easily devised by those of ordinary skill in the art from the technical scope of the present invention should be construed as belonging to the scope of equivalents of the present invention, which invention is defined and limited by the appended claims.

## Claims

1. A socket-fastening-type reinforcing bar connector using a binding end member comprising:
a first reinforcing bar (100, 200, 310, 410, 510, 610, 710) and a second reinforcing bar (110, 210, 320, 420, 520, 620, 720) abutting each other while having end portions facing each other;
a first binding end member (120, 220, 330, 430, 530, 630, 730) bound to the end portion of the first reinforcing bar (100, 200, 310, 510, 410, 610, 710) and having a male screw portion (121, 731) for coupling a fastening socket (140, 240, 340, 450, 550, 650, 750) formed in the longitudinal direction at an outer surface thereof;
a second binding end member (130, 230, 350, 440, 540, 640, 740) having one end portion formed of a shape corresponding to a shape of an end portion of the first binding end member (120, 220, 330, 430, 530, 630, 730) and the other end portion bound to the end portion of the second reinforcing bar (110, 210, 320, 420, 520, 620, 720) and spaced apart from the one end portion, and having one or a plurality of steps with one end portion in the axial direction forming any one angle selected from an acute angle, a right angle, and an obtuse angle with respect to the longitudinal direction; and
a hollow fastening socket (140, 240, 340, 450, 550, 650, 750) opened in the longitudinal direction to extend in the longitudinal direction to surround and accommodate an outer surface of the second binding end member (130, 230, 350, 440, 540, 640, 740) and an outer surface of the first binding end member (120, 220, 330, 430, 530, 630, 730), having a female screw portion (141, 541, 641, 751) for coupling the fastening socket (140, 240, 340, 450, 550, 650, 750) that is helically coupled to the male screw portion (121, 731) for coupling the fastening socket (140, 240, 340, 450, 550, 650, 750) of the first binding end member (120, 220, 330, 430, 530, 630, 730) formed in the longitudinal direction at an inner surface thereof, locked to the one or the plurality of steps of the second binding end member (130, 230, 350, 440, 540, 640, 740), and having one or a plurality of locking steps (142, 170) forming any one angle selected from an acute angle, a right angle, and an obtuse angle with respect to the longitudinal direction,
wherein the fastening socket (140, 240, 340, 450, 550, 650, 750) is moved forward toward the first binding end member (120, 220, 330, 430, 530, 630, 730) and rotated in a fastening tightening screw direction such that locking steps (142, 170) of the fastening socket (140, 240, 340, 450, 550, 650, 750) are tightly supported by the second binding end member (130, 230, 350, 440, 540, 640, 740) to allow the first binding end member (120, 220, 330, 430, 530, 630, 730) and the second binding end member (130, 230, 350, 440, 540, 640, 740) to be integrally fastened by the fastening socket (140, 240, 340, 450, 550, 650, 750) in order to mechanically join the first reinforcing bar (100, 200, 310, 410, 510, 610, 710) and the second reinforcing bar (110, 210, 320, 420, 620, 720),
a shape of the first binding end member (120, 220, 330, 430, 530, 630, 730) bound to the end portion of the first reinforcing bar (100, 200, 310, 410, 510, 610, 710) is a shape in which one end portion is a bar material shape having a width equal or similar to that of the first reinforcing bar (100, 200, 310, 410, 510, 610, 710) and a transverse cross-sectional surface formed in a circular shape in order to have a structure joined to the first reinforcing bar (100, 200, 310, 410, 510, 610, 710) and the other end portion is a bar material shape having a more extended width than the bar material shape of the one end portion and having the male screw portion (121, 731) for coupling the fastening socket (140, 240, 340, 450, 550, 650, 750) formed at the extended outer surface to have a width that is a sum of an extended bar material shape of the second binding end member (130, 230, 350, 440, 540, 640, 740) and a height of a screw thread in order to be a bar material shape extended by the width being stepped near the end portion in the longitudinal direction,
a shape of the second binding end member (130, 230, 350, 440, 540, 640, 740) bound to the end portion of the second reinforcing bar (110, 210, 320, 420, 520, 620, 720) is a shape in which one end portion is a bar material shape having a width equal or similar to that of the second reinforcing bar (110, 210, 320, 420, 520, 620, 720) and a transverse cross-sectional surface formed in a circular shape in order to have a structure joined to the second reinforcing bar (110, 210, 320, 420, 520, 620, 720) and the other end portion is a bar material shape having a more extended width than the bar material shape of the one end portion but being formed in a smaller width than an inner surface of the fastening socket (140, 240, 340, 450, 550, 650, 750) to allow the fastening socket (140, 240, 340, 450, 550, 650, 750) to move at an outer surface and having a step (131, 171) in a form of a protruding band that surrounds the outer surface to be extended by the width being stepped near the step (131, 171),
the step (131, 171) in the form of a protruding band is in the shape of a protruding band surrounding from a portion near the bar material shape in which the width of the second binding end member (130, 230, 350, 440, 540, 640, 740) is extended up to an end surface of the second binding end member (130, 230, 350, 440, 540, 640, 740) or forms a shape of a protruding band that surrounds the portion near the bar material shape in which the width of the second binding end member (130, 230, 350, 440, 540, 640, 740) is extended while having a shortened width,
the inner surface of the fastening socket (140, 240, 340, 450, 550, 650, 750) is a cylindrical shape having a circumference to be rotatable in the fastening tightening screw direction while having the longitudinal direction as an axis in order to surround the bar material shape in which the width of the second binding end member (130, 230, 350, 440, 540, 640, 740) is extended and be movably coupled to the outer surface of the second binding end member (130, 230, 350, 440, 540, 640, 740), and
the locking step (142, 170) protruding in a central direction in the shape of a protruding band is included at an opposite end portion of the female screw portion (141, 541, 641, 751) for coupling the fastening socket (140, 240, 340, 450, 550, 650, 750) of the inner surface of the fastening socket (140, 240, 340, 450, 550, 650, 750) to be locked to the one or the plurality of steps of the second binding end member (130, 230, 350, 440, 540, 640, 740), and the female screw portion (141, 541, 641, 751) for coupling the fastening socket (140, 240, 340, 450, 550, 650, 750) is formed at a portion near the end portion in the first binding end member direction at the inner surface of the fastening socket (140, 240, 340, 450, 550, 650, 750) such that the fastening socket (140, 240, 340, 450, 550, 650, 750) formed to surround the bar material shape in which the width of the second binding end member (130, 230, 350, 440, 540, 640, 740) is extended and the bar material shape in which the width of the first binding end member (120, 220, 330, 430, 530, 630, 730) is extended is helically fastened to the male screw portion (121, 731) for coupling the fastening socket (140, 240, 340, 450, 550, 650, 750) of the bar material shape in which the width of the first binding end member (120, 220, 330, 430, 530, 630, 730) is extended and the locking step (142, 170) and the step (131, 171) in the shape of the protruding band tightly support each other at the same time to allow the end portion of the extended bar material shape of the first binding end member (120, 220, 330, 430, 530, 630, 730) at which the male screw portion (121, 731) for coupling the fastening socket (140, 240, 340, 450, 550, 650, 750) is formed and the end portion of the extended bar material shape of the second binding end member (130, 230, 350, 440, 540, 640, 740) to be integrally coupled while supporting and facing each other,
**characterized in that**
the socket-fastening-type reinforcing bar connector further comprises a middle binding member (250, 760) wherein when adjusting the length of the first reinforcing bar (200, 710) and the second reinforcing bar (210, 720) the middle binding member (250, 760) is interposed between the first binding end member (220, 730) and the first reinforcing bar (200, 710) or the middle binding member (250, 760) is interposed between the second binding end member (230, 740) and the second reinforcing bar (210, 720), and binding between the first reinforcing bar (200, 710) and the middle binding member (250, 760), and binding between the second reinforcing bar (210, 720) and the middle binding member (250, 760) are performed by welding.

2. The socket-fastening-type reinforcing bar connector using a binding end member according to claim 1, wherein the middle binding member (250) is installable in any one case selected from:
a case in which the middle binding member (250) is interposed between the first binding end member (220) and the first reinforcing bar (200) such that one end portion of the middle binding member (250) is bound to the end portion of the first reinforcing bar (200), a male screw portion (251) for coupling the middle binding member (250) is formed in a predetermined section from the one end portion to the other end portion, a middle binding member accommodation groove (221) that accommodates the middle binding member (250) is formed at an end portion of the first binding end member (220) corresponding to the middle binding member (250), a female screw portion (222) for coupling the middle binding member (250) is formed at an inner surface of the accommodation groove (221), one or a plurality of lock nut bodies (260) having a circular or polygonal cross-sectional shape are formed at the middle binding member (250) such that a position of the middle binding member (250) is lockable, and the end portion of the first binding end member (220) corresponding to the middle binding member (250) is formed as in one case selected from a case in which a transverse cross-sectional surface from the end portion surface up to a predetermined distance is formed in a circular shape, a case in which the transverse cross-sectional surface is formed in a polygonal shape, and a case in which one or more pairs of grip surfaces facing each other are formed; and
a case in which the middle binding member (250) is interposed between the second binding end member (230) and the second reinforcing bar (210) such that the one end portion of the middle binding member (250) is bound to the end portion of the second reinforcing bar (210), the male screw portion (251) for coupling the middle binding member (250) is formed in a predetermined section from the one end portion to the other end portion, the middle binding member accommodation groove (221) that accommodates the middle binding member (250) is formed at an end portion of the second binding end member (230) corresponding to the middle binding member (250), the female screw portion (222) for coupling the middle binding member (250) is formed at the inner surface of the accommodation groove (221), the one or the plurality of lock nut bodies (260) having a transverse cross-sectional surface formed in a circular or polygonal shape are formed at the middle binding member (250) such that a position of the middle binding member (250) is lockable, and the end portion of the second binding end member (230) corresponding to the middle binding member (250) is formed as in one case selected from a case in which a transverse cross-sectional surface from the end portion surface up to a predetermined distance is formed in a circular shape, a case in which the transverse cross-sectional surface is formed in a polygonal shape, and a case in which one or more pairs of grip surfaces facing each other are formed.

3. The socket-fastening-type reinforcing bar connector using a binding end member according to claim 1, wherein the middle binding member (250) is installable in each of the cases by:
the middle binding member (250) in the first reinforcing bar (200) direction having one end portion bound to the end portion of the first reinforcing bar (200), a male screw portion (251) for coupling the middle binding member (250) being formed in the predetermined section from the one end portion to the other end portion, a first middle binding member accommodation groove (221) that accommodates the middle binding member (250) being formed at the end portion of the first binding end member (220) corresponding to the middle binding member (250), a female screw portion (222) for coupling the middle binding member (250) being formed at an inner surface of the accommodation groove (221), one or a plurality of lock nut bodies (260) having the transverse cross-sectional surface formed in a circular or polygonal shape being disposed at the middle binding member (250) such that a position of the middle binding member (250) is lockable, and the end portion of the first binding end member (220) corresponding to the middle binding member (250) being formed as in any one case selected from the case in which the transverse cross-sectional surface from the end portion surface up to a predetermined distance is formed in the circular shape, the case in which the transverse cross-sectional surface is formed in the polygonal shape, and the case in which the one or more pairs of grip surfaces facing each other are formed; and
the middle binding member (250) in the second reinforcing bar direction having one end portion bound to the end portion of the second reinforcing bar (210), the male screw portion (251) for coupling the middle binding member (250) being formed in a predetermined section from the one end portion to the other end portion, a middle binding member accommodation groove (221) that accommodates the middle binding member (250) being formed at the end portion of the second binding end member (230) corresponding to the middle binding member (250), the female screw portion (222) for coupling the middle binding member (250) being formed at the inner surface of the accommodation groove (221), the one or the plurality of lock nut bodies (260) having a transverse cross-sectional surface formed in a circular or polygonal shape being formed at the middle binding member (250) such that a position of the middle binding member (250) is lockable, and the end portion of the second binding end member (230) corresponding to the middle binding member (250) being formed as in one case selected from the case in which the transverse cross-sectional surface from the end portion surface up to a predetermined distance is formed in the circular shape, the case in which the transverse cross-sectional surface is formed in the polygonal shape, and the case in which the one or more pairs of grip surfaces facing each other are formed.

4. The socket-fastening-type reinforcing bar connector using a binding end member according to claim 1, claim 2, or claim 3, wherein end portion shapes of the first binding end member (120, 220, 330, 430, 530, 630, 730) and the second binding end member (130, 230, 350, 440, 540, 640, 740) are any shapes selected from:
a shape in which the end portion shape of the first binding end member (120, 220, 330, 430, 530, 630, 730) is a protruding portion formed in the longitudinal direction and the end portion shape of the second binding end member (130, 230, 350, 440, 540, 640, 740) is an accommodation unit formed in the same shape as the protruding portion to have the protruding portion fitted thereto; and
a shape in which the end portion shape of the second binding end member (130, 230, 350, 440, 540, 640, 740) is a protruding portion formed in the longitudinal direction and the end portion shape of the first binding end member (120, 220, 330, 430, 530, 630, 730) is an accommodation unit formed in the same shape as the protruding portion to have the protruding portion fitted thereto, and
the end portion shapes of the first binding end member (120, 220, 330, 430, 530, 630, 730) and the second binding end member (130, 230, 350, 440, 540, 640, 740) are exchangeable with each other.

5. The socket-fastening-type reinforcing bar connector using a binding end member according to claim 1, claim 2 or claim 3, wherein the end portion shapes of the first binding end member (120, 220, 330, 430, 530, 630, 730) and the second binding end member (130, 230, 350, 440, 540, 640, 740) are any shapes selected from:
a shape in which the end portion shape of the first binding end member (120, 220, 330, 430, 530, 630, 730) is any one selected from a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape protruding from the center in the longitudinal direction, and a flat surface and an embossed surface perpendicular to the longitudinal direction, and the end portion shape of the second binding end member (130, 230, 350, 440, 540, 640, 740) is an accommodation unit of the end portion shape of the first binding end member (120, 220, 330, 430, 530, 630, 730) that is formed in the same shape as the end portion shape of the first binding end member (120, 220, 330, 430, 530, 630, 730); and
a shape in which the end portion shape of the second binding end member (130, 230, 350, 440, 540, 640, 740) is any one selected from a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape protruding from the center in the longitudinal direction, and a flat surface (860) and an embossed surface perpendicular to the longitudinal direction, and the end portion shape of the first binding end member (120, 220, 330, 430, 530, 630, 730) is an accommodation unit of the end portion shape of the second binding end member (130, 230, 350, 440, 540, 640, 740) that is formed in the same shape as the end portion shape of the second binding end member (130, 230, 350, 440, 540, 640, 740), and
the end portion shapes of the first binding end member (120, 220, 330, 430, 530, 630, 730) and the second binding end member (130, 230, 350, 440, 540, 640, 740) are exchangeable with each other.

6. The socket-fastening-type reinforcing bar connector using a binding end member according to claim 1, claim 2 or claim 3, wherein the end portion shapes of the first binding end member (120, 220, 330, 430, 530, 630, 730) and the second binding end member (130, 230, 350, 440, 540, 640, 740) are any shapes selected from:
a shape in which the end portion shape of the first binding end member (120, 220, 330, 430, 530, 630, 730) is a multi-step inclined type protruding portion having one or a plurality of sections in which a surface area gradually decreases and sections in which a surface area is constant in the longitudinal direction and the end portion shape of the second binding end member (130, 230, 350, 440, 540, 640, 740) is an accommodation unit formed in a shape corresponding to the protruding portion; and
a shape in which the end portion shape of the second binding end member (130, 230, 350, 440, 540, 640, 740) is a multi-step inclined type protruding portion having one or a plurality of sections in which a surface area gradually decreases and sections in which a surface area is constant in the longitudinal direction and the end portion shape of the first binding end member (120, 220, 330, 430, 530, 630, 730) is an accommodation unit formed in a shape corresponding to the protruding portion, and
the end portion shapes of the first binding end member (120, 220, 330, 430, 530, 630, 730) and the second binding end member (130, 230, 350, 440, 540, 640, 740) are exchangeable with each other.

7. The socket-fastening-type reinforcing bar connector using a binding end member according to claim 5, wherein the embossed surface is formed of:
a convex portion having one or a plurality of any one selected from a longitudinal cross-sectional surface formed in a triangular shape, a triangular shape with a round vertex, a quadrangular shape, a quadrangular shape with a round edge angle, a cut spherical shape, a cut elliptical-spherical shape, a cross shape formed at an end portion surface, a shape in which a cross shape and a circular shape are combined, and a corrugated shape curved in a wave form, all of which are equidistant from the center of the end portion surface; and
a concave portion formed in a shape accommodating the convex portion.

8. The socket-fastening-type reinforcing bar connector using a binding end member according to claim 5,
wherein a longitudinal cross-section of any one selected from the end portion shapes of the first binding end member (120, 220, 330, 430, 530, 630, 730) and the second binding end member (130, 230, 350, 440, 540, 640, 740) forming a cone, a truncated cone, a rounded cone, a cylinder, a polygonal pyramid, a truncated polygonal pyramid, a rounded polygonal pyramid, a polygonal column, a cut spherical shape, and a cut elliptical-spherical shape is formed to form multiple stages; and
an angle formed by the multiple stages is any one angle selected from an acute angle, a right angle, and an obtuse angle.

9. The socket-fastening-type reinforcing bar connector using a binding end member according to claim 1, claim 2, or claim 3,
wherein the locking steps (142, 170) and the steps (131, 171) are disposed in a plurality and formed in multiple stages to distribute stress caused by a tensile force concentrated to the fastening socket (140, 240, 340, 450, 550, 650, 750); and
an angle formed by the locking steps (142, 170) and the steps (131, 171) is any one angle selected from an acute angle, a right angle, and an obtuse angle.

10. The socket-fastening-type reinforcing bar connector using a binding end member according to claim 1, claim 2, or claim 3, wherein the sizes of the first reinforcing bar (100, 200, 310, 410, 510, 610, 710) and the second reinforcing bar (110, 210, 320, 420, 520, 620, 720) are different.

11. The socket-fastening-type reinforcing bar connector using a binding end member according to claim 1, claim 2, or claim 3, wherein joining of adjacent bar materials having end portions facing each other is possible by any one case selected from:
a case in which the first binding end member (120, 220, 330, 430, 530, 630, 730) and the second binding end member (130, 230, 350, 440, 540, 640, 740) are respectively bound to the end portions of the bar materials;
a case in which the first binding end member (120, 220, 330, 430, 530, 630, 730) and the middle binding member (250, 760) are respectively bound to one side and the other side of the end portions of the bar materials; and
a case in which the second binding end member (130, 230, 350, 440, 540, 640, 740) and the middle binding member (250, 760) are respectively bound to one side and the other side of the end portions of the bar materials.

12. The socket-fastening-type reinforcing bar connector using a binding end member according to claim 1, wherein the binding between the first reinforcing bar (200, 710) and the first binding end member (220, 730), the binding between the second reinforcing bar (210, 720) and the second binding end member (230, 740), the binding between the first reinforcing bar (200, 710) and the middle binding member (250, 760), and the binding between the second reinforcing bar (210, 720) and the middle binding member (250, 760) are performed by any one selected from friction welding, linear friction welding, arc stud welding method, butt welding, ultrasonic vibration welding, resistance welding, plasma welding, electronic beam welding, laser welding, high-frequency welding, and argon welding.

## Patentansprüche

1. Verstärkungs-Stabanschluss von Steckdosenbefestigungstyp einer unter Verwendung eines Bindungsendelements mit:
einem ersten Verstärkungsstab (100, 200, 310, 410, 510, 610, 710) und einem zweiten Verstärkungsstab (110, 210, 320, 420, 520, 620, 720), die aneinander anschlagen, mit einander gegenüberliegenden Endteilen;
einem ersten Bindungsendelement (120, 220, 330, 430, 530, 630, 730), das mit dem Endteil des ersten Verstärkungsstabs (100, 200, 310, 510, 410, 610, 710) verbunden ist und ein Außenschraubenteil (121, 731) zur Kupplung einer Befestigungssteckdose (140, 240, 340, 450, 550, 650, 750) umfasst, die in Längsrichtung an einer Außenfläche davon gebildet ist;
einem zweiten Bindungsendelement (130, 230, 350, 440, 540, 640, 740) mit einem Endteil bestehend aus einer Form entsprechend einer Form eines Endteils des ersten Bindungsendelements (120, 220, 330, 430, 530, 630, 730) und das andere Endteil ist mit dem Endteil des zweiten Verstärkungsstabs (110, 210, 320, 420, 520, 620, 720) verbunden und von dem einen Endteil beabstandet, mit einem oder einer Vielzahl von Stufen, wobei ein Endteil in der axialen Richtung einen beliebigen Winkel bildet, ausgewählt aus folgenden: einem spitzen Winkel, einem rechten Winkel und einem stumpfen Winkel in Bezug auf die Längsrichtung; und
einer hohlen Befestigungssteckdose (140, 240, 340, 450, 550, 650, 750), die in Längsrichtung offen ist, um in Längsrichtung zu verlaufen, um eine Außenfläche des zweiten Bindungsendelements (130, 230, 350, 440, 540, 640, 740) und eine Außenfläche des ersten Bindungsendelements (120, 220, 330, 430, 530, 630, 730) zu umgeben und aufzunehmen, mit einem Innenschraubenteil (141, 541, 641, 751) zur Kupplung der Befestigungssteckdose (140, 240, 340, 450, 550, 650, 750), die spiralförmig mit dem Außenschraubenteil (121, 731) verbunden ist, zur Kupplung der Befestigungssteckdose (140, 240, 340, 450, 550, 650, 750) des ersten Bindungsendelements (120, 220, 330, 430, 530, 630, 730), gebildet in Längsrichtung an einer Innenfläche davon, mit der einen oder der Vielzahl von Stufen des zweiten Bindungsendelements (130, 230, 350, 440, 540, 640, 740) verklemmt, mit einer oder eine Vielzahl von Klemmstufen (142, 170) unter Bildung einer der folgenden Winkel: ein spitzer Winkel, ein rechter Winkel und ein stumpfer Winkel in Bezug auf die Längsrichtung,
wobei die Befestigungssteckdose (140, 240, 340, 450, 550, 650, 750) vorwärts hin zu dem ersten Bindungsendelement (120, 220, 330, 430, 530, 630, 730) bewegt wird und in einer Schraubenfestziehrichtung gedreht wird, so dass Klemmstufen (142, 170) der Befestigungssteckdose (140, 240, 340, 450, 550, 650, 750) von dem zweiten Bindungsendelement (130, 230, 350, 440, 540, 640, 740) festgehalten werden, damit das erste Bindungsendelement (120, 220, 330, 430, 530, 630, 730) und das zweite Bindungsendelement (130, 230, 350, 440, 540, 640, 740) vollständig von der Befestigungssteckdose (140, 240, 340, 450, 550, 650, 750) befestigt werden, um mechanisch den ersten Verstärkungsstab (100, 200, 310, 410, 510, 610, 710) und den zweiten Verstärkungsstab (110, 210, 320, 420, 620, 720) zu verbinden,
eine Form des ersten Bindungsendelements (120, 220, 330, 430, 530, 630, 730), die mit dem Endteil des ersten Verstärkungsstabs (100, 200, 310, 410, 510, 610, 710) verbunden ist, ist eine Form, bei der ein Endteil eine Form aus Stabmaterial ist, mit einer Breite gleich oder ähnlich der des ersten Verstärkungsstabs (100, 200, 310, 410, 510, 610, 710) und eine querlaufenden Querschnittsfläche, die in einer runden Form gebildet ist, um eine Struktur zu haben, die mit dem ersten Verstärkungsstab (100, 200, 310, 410, 510, 610, 710) verbunden ist, und das andere Endteil ist eine Form aus Stabmaterial mit größerer Breite als die Form aus Stabmaterial des einen Endteils und hat das Außenschraubenteil (121, 731) zur Kupplung der Befestigungssteckdose (140, 240, 340, 450, 550, 650, 750), die an der erweiterten Außenfläche gebildet ist, um eine Breite zu haben, die eine Summe einer erweiterten Form aus Stabmaterial des zweiten Bindungsendelements (130, 230, 350, 440, 540, 640, 740) und eine Höhe eines Schraubengewindes ist, um eine Form aus Stabmaterial zu sein, die um diejenige Breite erweitert ist, die in der Nähe des Endteils in Längsrichtung abgestuft ist,
eine Form des zweiten Bindungsendelements (130, 230, 350, 440, 540, 640, 740), die mit dem Endteil des zweiten Verstärkungsstabs (110, 210, 320, 420, 520, 620, 720) verbunden ist, ist eine Form, in der ein Endteil eine Form aus Stabmaterial mit einer Breite gleich oder ähnlich der des zweiten Verstärkungsstabs (110, 210, 320, 420, 520, 620, 720) ist, und eine querlaufende Querschnittsfläche ist in einer runden Form gebildet, um eine Struktur zu haben, die mit dem zweiten Verstärkungsstab (110, 210, 320, 420, 520, 620, 720) verbunden ist, und das andere Endteil ist eine Form aus Stabmaterial mit größerer Breite als die Form aus Stabmaterial des einen Endteils, aber es ist in einer kleineren Breite gebildet als eine Innenfläche der Befestigungssteckdose (140, 240, 340, 450, 550, 650, 750), damit die Befestigungssteckdose (140, 240, 340, 450, 550, 650, 750) sich an einer Außenfläche bewegt, mit einer Stufe (131, 171) in Form eines vorspringenden Bandes, das die Außenfläche umgibt, um um die Breite erweitert zu werden, die in der Nähe der Stufe (131, 171) abgestuft ist,
die Stufe (131, 171) in Form eines vorspringenden Bandes ist in Form eines vorspringenden Bandes, umgebend von einem Teil in der Nähe der Form aus Stabmaterial, wobei die Breite des zweiten Bindungsendelements (130, 230, 350, 440, 540, 640, 740) bis zu einer Endfläche des zweiten Bindungsendelements (130, 230, 350, 440, 540, 640, 740) erweitert ist oder eine Form eines vorspringenden Bandes bildet, das das Teil in der Nähe der Form aus Stabmaterial umgibt, wobei die Breite des zweiten Bindungsendelements (130, 230, 350, 440, 540, 640, 740) erweitert ist, aber eine verkürzte Breite hat,
die Innenfläche der Befestigungssteckdose (140, 240, 340, 450, 550, 650, 750) ist eine zylindrische Form, deren Umfang in der Schraubenfestziehrichtung drehbar ist, mit der Längsrichtung als Achse, um die Form aus Stabmaterial zu umgeben, wobei die Breite des zweiten Bindungsendelements (130, 230, 350, 440, 540, 640, 740) erweitert ist und mit der Außenfläche des zweiten Bindungsendelements (130, 230, 350, 440, 540, 640, 740) beweglich verbunden ist, und
die Klemmstufe (142, 170) springt in einer mittleren Richtung in Form eines vorspringenden Bandes vor und ist an einem gegenüberliegenden Endteil des Innenschraubenteils (141, 541, 641, 751) eingeschlossen, zur Kupplung der Befestigungssteckdose (140, 240, 340, 450, 550, 650, 750) der Innenfläche der Befestigungssteckdose (140, 240, 340, 450, 550, 650, 750), die mit der einen oder der Vielzahl von Stufen des zweiten Bindungsendelements (130, 230, 350, 440, 540, 640, 740) zusammengeklemmt wird, und das Innenschraubenteil (141, 541, 641, 751) zur Kupplung der Befestigungssteckdose (140, 240, 340, 450, 550, 650, 750) ist an einem Teil in der Nähe des Endteils in der ersten Bindungsendelement-Richtung an der Innenfläche der Befestigungssteckdose (140, 240, 340, 450, 550, 650, 750) gebildet, so dass die Befestigungssteckdose (140, 240, 340, 450, 550, 650, 750) gebildet ist, um die Form aus Stabmaterial zu umgeben, wobei die Breite des zweiten Bindungsendelements (130, 230, 350, 440, 540, 640, 740) erweitert ist und die Form aus Stabmaterial, bei der die Breite des ersten Bindungsendelements (120, 220, 330, 430, 530, 630, 730) erweitert ist, ist spiralförmig an dem Außenschraubenteil (121, 731) zur Kupplung der Befestigungssteckdose (140, 240, 340, 450, 550, 650, 750) der Form aus Stabmaterial befestigt, wobei die Breite des ersten Bindungsendelements (120, 220, 330, 430, 530, 630, 730) erweitert ist und die Klemmstufe (142,170) und die Stufe (131, 171) in Form des vorspringenden Bandes einander gleichzeitig fest unterstützen, damit das Endteil der erweiterten Form aus Stabmaterial des ersten Bindungsendelements (120, 220, 330, 430, 530, 630, 730), bei dem das Außenschraubenteil (121, 731) zur Kupplung der Befestigungssteckdose (140, 240, 340, 450, 550, 650, 750) gebildet ist und das Endteil der erweiterten Form aus Stabmaterial des zweiten Bindungsendelements (130, 230, 350, 440, 540, 640, 740), vollständig gekoppelt wird, während sie einander gegenüberliegen und stützen,
**gekennzeichnet dadurch, dass**
der Verstärkungs-Stabanschluss von Steckdosenbefestigungstyp einer des Weiteren ein mittleres Bindeelement (250, 760) umfasst,
wobei bei Einstellen der Länge des ersten Verstärkungsstabs (200, 710) und des zweiten Verstärkungsstabs (210, 720) das mittlere Bindeelement (250, 760) sich zwischen dem ersten Bindungsendelement (220, 730) und dem ersten Verstärkungsstab (200, 710) befindet, oder das mittlere Bindeelement (250, 760) befindet sich zwischen dem zweiten Bindungsendelement (230, 740) und dem zweiten Verstärkungsstab (210, 720), und
die Verbindung zwischen dem ersten Verstärkungsstab (200, 710) und dem mittleren Bindeelement (250, 760), und die Verbindung zwischen dem zweiten Verstärkungsstab (210, 720) und dem mittleren Bindeelement (250, 760) werden durch Schweißen durchgeführt.

2. Verstärkungs-Stabanschluss von Steckdosenbefestigungstyp einer unter Verwendung eines Bindungsendelements nach Anspruch 1, wobei das mittlere Bindeelement (250) in einem der folgenden Fälle installierbar ist:
einem Fall, bei dem das mittlere Bindeelement (250) sich zwischen dem ersten Bindungsendelement (220) und dem ersten Verstärkungsstab (200) befindet, so dass ein Endteil des mittleren Bindeelements (250) an das Endteil des ersten Verstärkungsstabs (200) gebunden ist, ein Außenschraubenteil (251) zur Kupplung des mittleren Bindeelements (250) ist in einem vorherbestimmten Abschnitt von dem einen Endteil zu dem anderen Endteil gebildet, eine Aufnahmenut (221) für das mittlere Bindeelement, die das mittlere Bindeelement (250) aufnimmt, ist an einem Endteil des ersten Bindungsendelements (220) entsprechend dem mittleren Bindeelement (250) gebildet, ein Innenschraubenteil (222) zur Kupplung des mittleren Bindeelements (250) ist an einer Innenfläche der Aufnahmenut (221) gebildet, ein oder eine Vielzahl von Klemmnutkörpern (260) mit runder oder mehreckiger Querschnittsform ist an dem mittleren Bindeelement (250) gebildet, so dass eine Position des mittleren Bindeelements (250) klemmbar ist, und das Endteil des ersten Bindungsendelements (220), entsprechend dem mittleren Bindeelement (250), ist gebildet wie in einem der folgenden Fälle: ein Fall, bei dem eine querlaufende Querschnittsfläche von der Endteiloberfläche bis zu einem vorherbestimmten Abstand in einer runden Form gebildet ist, ein Fall, bei dem die querlaufende Querschnittsfläche in einer mehreckigen Form gebildet ist, und ein Fall, bei dem ein oder mehrere Paare von einander gegenüberliegenden Griffflächen gebildet sind; und
einem Fall, bei dem das mittlere Bindeelement (250) sich zwischen dem zweiten Bindungsendelement (230) und dem zweiten Verstärkungsstab (210) befindet, so dass das eine Endteil des mittleren Bindeelements (250) an das Endteil des zweiten Verstärkungsstabs (210) gebunden ist, das Außenschraubenteil (251) zur Kupplung des mittleren Bindeelements (250) ist in einem vorherbestimmten Abschnitt von dem einen Endteil zu dem anderen Endteil gebildet, die Aufnahmenut (221) für das mittlere Bindeelement, die das mittlere Bindeelement (250) aufnimmt, ist an einem Endteil des zweiten Bindungsendelements (230) entsprechend dem mittleren Bindeelement (250) gebildet, das Innenschraubenteil (222) zur Kupplung des mittleren Bindeelements (250) ist an der Innenfläche der Aufnahmenut (221) gebildet, der eine oder die Vielzahl von Klemmnutkörpern (260) mit einer querlaufende Querschnittsfläche in runder oder mehreckige Form ist an dem mittleren Bindeelement (250) gebildet, so dass eine Position des mittleren Bindeelements (250) klemmbar ist, und das Endteil des zweiten Bindungsendelements (230) entsprechend dem mittleren Bindeelement (250) ist wie in einem der folgenden Fälle gebildet: ein Fall, bei dem eine querlaufende Querschnittsfläche von der Endteiloberfläche bis zu einem vorherbestimmten Abstand in einer runden Form gebildet ist, ein Fall, bei dem die querlaufende Querschnittsfläche in einer mehreckigen Form gebildet ist, und ein Fall, bei dem ein oder mehrere Paare von einander gegenüberliegenden Griffflächen gebildet sind.

3. Verstärkungs-Stabanschluss von Steckdosenbefestigungstyp einer unter Verwendung eines Bindungsendelements nach Anspruch 1, wobei das mittlere Bindeelement (250) in jedem der folgenden Fälle installierbar ist:
das mittlere Bindeelement (250) in Richtung des ersten Verstärkungsstabs (200) hat ein Endteil, das mit dem Endteil des ersten Verstärkungsstabs (200) verbunden ist, ein Außenschraubenteil (251) zur Kupplung des mittleren Bindeelements (250) ist in dem vorherbestimmten Abschnitt von dem einen Endteil zu dem anderen Endteil gebildet, eine erste Aufnahmenut (221) für das mittlere Bindeelement, die das mittlere Bindeelement (250) aufnimmt, ist an dem Endteil des ersten Bindungsendelements (220) entsprechend dem mittleren Bindeelement (250) gebildet, ein Innenschraubenteil (222) zur Kupplung des mittleren Bindeelements (250) ist an einer Innenfläche der Aufnahmenut (221) gebildet, ein oder eine Vielzahl von Klemmnutkörpern (260) mit der querlaufenden Querschnittsfläche, die in einer runden oder mehreckigen Form gebildet ist, ist am mittleren Bindeelement (250) angeordnet, so dass eine Position des mittleren Bindeelements (250) klemmbar ist, und das Endteil des ersten Bindungsendelements (220) entsprechend dem mittleren Bindeelement (250) ist wie in einem der folgenden Fälle gebildet: der Fall, bei dem die querlaufende Querschnittsfläche von der Endteiloberfläche bis zu einem vorherbestimmten Abstand in der runden Form gebildet ist, der Fall, bei dem die querlaufende Querschnittsfläche in der mehreckigen Form gebildet ist, und der Fall, bei dem das eine oder die mehreren Paare von einander gegenüberliegenden Griffflächen gebildet sind; und
das mittlere Bindeelement (250) in Richtung des zweiten Verstärkungsstabs hat ein Endteil, das mit dem Endteil des zweiten Verstärkungsstabs (210) verbunden ist, das Außenschraubenteil (251) zur Kupplung des mittleren Bindeelements (250) ist in einem vorherbestimmten Abschnitt von dem einen Endteil zu dem anderen Endteil hin gebildet,
eine Aufnahmenut (221) für das mittlere Bindeelement, die das mittlere Bindeelement (250) aufnimmt, ist am Endteil des zweiten Bindungsendelements (230) entsprechend dem mittleren Bindeelement (250) gebildet, das Innenschraubenteil (222) zur Kupplung des mittleren Bindeelements (250) ist an der Innenfläche der Aufnahmenut (221) gebildet, der eine oder die Vielzahl von Klemmnutkörpern (260) mit einer querlaufenden Querschnittsfläche, die in einer runden oder mehreckigen Form gebildet ist, ist an dem mittleren Bindeelement (250) gebildet, so dass eine Position des mittleren Bindeelements (250) klemmbar ist, und das Endteil des zweiten Bindungsendelements (230) entsprechend dem mittleren Bindeelement (250) ist wie in einem der folgenden Fälle gebildet: der Fall, bei dem die querlaufende Querschnittsfläche von der Endteiloberfläche bis zu einem vorherbestimmten Abstand in der runden Form gebildet ist, der Fall, bei dem die querlaufende Querschnittsfläche in der mehreckigen Form gebildet ist, und der Fall, bei dem das eine oder die mehreren Paare von einander gegenüberliegenden Griffflächen gebildet sind.

4. Verstärkungs-Stabanschluss von Steckdosenbefestigungstyp einer unter Verwendung eines Bindungsendelements nach Anspruch 1, Anspruch 2, oder Anspruch 3, wobei Endteilformen des ersten Bindungsendelements (120, 220, 330, 430, 530, 630, 730) und des zweiten Bindungsendelements (130, 230, 350, 440, 540, 640, 740) eine beliebige der folgenden Formen haben:
eine Form, bei der die Endteilform des ersten Bindungsendelements (120, 220, 330, 430, 530, 630, 730) ein vorspringendes Teil ist, das in Längsrichtung gebildet ist, und die Endteilform des zweiten Bindungsendelements (130, 230, 350, 440, 540, 640, 740) eine Aufnahmeeinheit ist, die in derselben Form gebildet ist wie das vorspringende Teil, damit das vorspringende Teil dort hineinpasst; und
eine Form, bei der die Endteilform des zweiten Bindungsendelements (130, 230, 350, 440, 540, 640, 740) ein vorspringendes Teil ist, das in Längsrichtung gebildet ist, und die Endteilform des ersten Bindungsendelements (120, 220, 330, 430, 530, 630, 730) eine Aufnahmeeinheit ist, die in derselben Form gebildet ist wie das vorspringende Teil, damit das vorspringende Teil dort hineinpasst, und
die Endteilformen des ersten Bindungsendelements (120, 220, 330, 430, 530, 630, 730) und des zweiten Bindungsendelement (130, 230, 350, 440, 540, 640, 740) miteinander austauschbar sind.

5. Verstärkungs-Stabanschluss von Steckdosenbefestigungstyp einer unter Verwendung eines Bindungsendelements nach Anspruch 1, Anspruch 2 oder Anspruch 3, wobei die Endteilformen des ersten Bindungsendelements (120, 220, 330, 430, 530, 630, 730) und des zweiten Bindungsendelements (130, 230, 350, 440, 540, 640, 740) eine beliebige der folgenden Formen haben:
eine Form, bei der die Endteilform des ersten Bindungsendelements (120, 220, 330, 430, 530, 630, 730) eine beliebige der folgenden ist: ein Konus, ein Stumpfkegel, ein abgerundeter Konus, ein Zylinder, eine mehreckige Pyramide, ein mehreckiger Pyramidenstumpf, eine abgerundete mehreckige Pyramide, eine mehreckige Säule, eine geschnittene Kugelform, und eine geschnittene elliptisch-kugelige Form, die von der Mitte in Längsrichtung vorspringt, und eine ebene Fläche und eine erhabene Oberfläche senkrecht zur Längsrichtung, und die Endteilform des zweiten Bindungsendelements (130, 230, 350, 440, 540, 640, 740) ist eine Aufnahmeeinheit für die Endteilform des ersten Bindungsendelements (120, 220, 330, 430, 530, 630, 730), die in derselben Form gebildet ist wie die Endteilform des ersten Bindungsendelements (120, 220, 330, 430, 530, 630, 730); und
eine Form, bei der die Endteilform des zweiten Bindungsendelements (130, 230, 350, 440, 540, 640, 740) eine der folgenden ist: ein Konus ist, ein Stumpfkegel, ein abgerundeter Konus, ein Zylinder, eine mehreckige Pyramide, ein mehreckiger Pyramidenstumpf, eine abgerundete mehreckige Pyramide, eine mehreckige Säule, eine geschnittene Kugelform und eine geschnittene elliptisch-kugelige Form, die von der Mitte in Längsrichtung vorspringt,
und eine ebene Fläche (860) und eine erhabene Oberfläche senkrecht zur Längsrichtung, und die Endteilform des ersten Bindungsendelements (120, 220, 330, 430, 530, 630, 730) ist eine Aufnahmeeinheit für die Endteilform des zweiten Bindungsendelements (130, 230, 350, 440, 540, 640, 740), das in derselben Form gebildet ist wie die Endteilform des zweiten Bindungsendelements (130, 230, 350, 440, 540, 640, 740), und
die Endteilformen des ersten Bindungsendelements (120, 220, 330, 430, 530, 630, 730) und des zweiten Bindungsendelements (130, 230, 350, 440, 540, 640, 740) sind miteinander austauschbar.

6. Verstärkungs-Stabanschluss von Steckdosenbefestigungstyp unter Verwendung eines Bindungsendelements nach Anspruch 1, Anspruch 2 oder Anspruch 3, wobei die Endteilformen des ersten Bindungsendelements (120, 220, 330, 430, 530, 630, 730) und des zweiten Bindungsendelements (130, 230, 350, 440, 540, 640, 740) beliebige der folgenden Formen sind:
eine Form, bei der die Endteilform des ersten Bindungsendelements (120, 220, 330, 430, 530, 630, 730) ein geneigtes vorspringendes Teil mit mehreren Stufen ist, mit einem oder einer Vielzahl von Abschnitten, in denen ein Oberflächenbereich sich allmählich verringert und Abschnitten, in denen ein Oberflächenbereich konstant in Längsrichtung ist, und die Endteilform des zweiten Bindungsendelements (130, 230, 350, 440, 540, 640, 740) eine Aufnahmeeinheit ist, die in einer Form entsprechend dem vorspringenden Teil gebildet ist; und
eine Form, bei der die Endteilform des zweiten Bindungsendelements (130, 230, 350, 440, 540, 640, 740) ein geneigtes vorspringendes Teil mit mehreren Stufen ist, mit einem oder einer Vielzahl von Abschnitten, in denen ein Oberflächenbereich sich allmählich verringert und Abschnitten, in denen ein Oberflächenbereich konstant in Längsrichtung ist, und die Endteilform des ersten Bindungsendelements (120, 220, 330, 430, 530, 630, 730) ist eine Aufnahmeeinheit, die in einer Form entsprechend dem vorspringenden Teil gebildet ist; und
die Endteilformen des ersten Bindungsendelements (120, 220, 330, 430, 530, 630, 730) und des zweiten Bindungsendelements (130, 230, 350, 440, 540, 640, 740) miteinander austauschbar sind.

7. Verstärkungs-Stabanschluss von Steckdosenbefestigungstyp einer unter Verwendung eines Bindungsendelements nach Anspruch 5, wobei die erhabene Oberfläche aus folgendem gebildet ist:
einem konvexem Teil mit einem oder einer Vielzahl der folgenden: einer Längs- Querschnittsfläche, die in einer dreieckigen Form gebildet ist, einer dreieckigen Form mit einem runden Scheitelpunkt, einer viereckigen Form, einer viereckigen Form mit einem runden Kantenwinkel, einer geschnittenen Kugelform, einer geschnittenen elliptischkugelförmigen Form, einer Kreuzform, die an einer Endteiloberfläche gebildet ist, einer Form, bei der eine Kreuzform und eine runde Form verbunden sind, und einer wellenförmigen Form, die in Wellenform gebogen ist, wobei alle abstandsgleich von der Mitte der Endteiloberfläche sind; und
einem konkaven Teil, das in einer Form gebildet ist, die das konvexe Teil aufnehmen kann.

8. Verstärkungs-Stabanschluss von Steckdosenbefestigungstyp einer unter Verwendung eines Bindungsendelements nach Anspruch 5,
wobei ein Längsquerschnitt einer der Endteilformen des ersten Bindungsendelements (120, 220, 330, 430, 530, 630, 730) und des zweiten Bindungsendelements (130, 230, 350, 440, 540, 640, 740) einen Konus, einen Stumpfkegel, einen abgerundeten Konus, einen Zylinder, eine mehreckige Pyramide, einen mehreckigen Pyramidenstumpf, eine abgerundete mehreckige Pyramide, eine mehreckige Säule, eine geschnittene Kugelform bilden, und eine geschnittene elliptisch-kugelförmige Form wird gebildet, um mehrere Stufen zu bilden; und
ein Winkel, der aus den mehreren Stufen gebildet ist, ist ein beliebiger der folgenden: ein spitzer Winkel, ein rechter Winkel und ein stumpfer Winkel.

9. Verstärkungs-Stabanschluss von Steckdosenbefestigungstyp einer unter Verwendung eines Bindungsendelements nach Anspruch 1, Anspruch 2, oder Anspruch 3,
wobei die Klemmstufen (142, 170) und die Stufen (131, 171) in einer Vielzahl angeordnet sind und in mehreren Absätzen gebildet sind, um die Belastung zu verteilen, die von einer Zugkraft hervorgerufen wird, die auf die Befestigungssteckdose (140, 240, 340, 450, 550, 650, 750) konzentriert ist; und
ein Winkel, der von den Klemmstufen (142, 170) und den Stufen (131, 171) gebildet wird, einer der folgenden ist: ein spitzer Winkel, ein rechter Winkel und ein stumpfer Winkel.

10. Verstärkungs-Stabanschluss von Steckdosenbefestigungstyp einer unter Verwendung eines Bindungsendelements nach Anspruch 1, Anspruch 2 oder Anspruch 3, wobei die Größe des ersten Verstärkungsstabs (100, 200, 310, 410, 510, 610, 710) und die des zweiten Verstärkungsstabs (110, 210, 320, 420, 520, 620, 720) verschieden sind.

11. Verstärkungs-Stabanschluss von Steckdosenbefestigungstyp einer unter Verwendung eines Bindungsendelements nach Anspruch 1, Anspruch 2 oder Anspruch 3, wobei die Verbindung von benachbarten Stabmaterialien mit einander gegenüberliegenden Endteilen durch einen der folgenden Fälle möglich ist:
einen Fall, bei dem das erste Bindungsendelement (120, 220, 330, 430, 530, 630, 730) und das zweite Bindungsendelement (130, 230, 350, 440, 540, 640, 740) jeweils mit den Endteilen der Stabmaterialien verbunden sind;
einen Fall, bei dem das erste Bindungsendelement (120, 220, 330, 430, 530, 630, 730) und das mittlere Bindeelement (250,760) jeweils mit einer Seite und der anderen Seite der Endteile der Stabmaterialien verbunden sind; und
einen Fall, bei dem das zweite Bindungsendelement (130, 230, 350, 440, 540, 640, 740) und das mittlere Bindeelement (250,760) jeweils mit einer Seite und der anderen Seite der Endteile der Stabmaterialien verbunden sind.

12. Verstärkungs-Stabanschluss von Steckdosenbefestigungstyp einer unter Verwendung eines Bindungsendelements nach Anspruch 1, wobei die Verbindung zwischen dem ersten Verstärkungsstab (200, 710) und dem ersten Bindungsendelement (220, 730), die Verbindung zwischen dem zweiten Verstärkungsstab (210, 720) und dem zweiten Bindungsendelement (230, 740), die Verbindung zwischen dem ersten Verstärkungsstab (200, 710) und dem mittleren Bindeelement (250, 760), und die Verbindung zwischen dem zweiten Verstärkungsstab (210, 720) und dem mittleren Bindeelement (250, 760) durch eine der folgenden Methoden durchgeführt werden: Reibungsschweißen, lineares Reibungsschweißen, Lichtbogenbolzenschweißen, Stumpfschweißen, Ultraschallvibrationsschweißen, Widerstandsschweißen, Plasmaschweißen, Elektronenstrahlschweißen, Laserschweißen, Hochfrequenzschweißen und Argonschweißen.

## Revendications

1. Raccord de barre de renforcement du type à fixation par douille utilisant un élément d'extrémité de liaison, comprenant :
une première barre de renforcement (100, 200, 310, 410, 510, 610, 710) et une seconde barre de renforcement (110, 210, 320, 420, 520, 620, 720) en butée l'une contre l'autre tout en ayant des parties d'extrémité tournées l'une vers l'autre ;
un premier élément d'extrémité de liaison (120, 220, 330, 430, 530, 630, 730) lié à la partie d'extrémité de la première barre de renforcement (100, 200, 310, 510, 410, 610, 710) et ayant une partie filetée mâle (121, 731) pour coupler une douille de fixation (140, 240, 340, 450, 550, 650, 750) formée dans la direction longitudinale au niveau d'une surface externe de celle-ci ;
un second élément d'extrémité de liaison (130, 230, 350, 440, 540, 640, 740) ayant une partie d'extrémité ayant une forme correspondant à une forme d'une partie d'extrémité du premier élément d'extrémité de liaison (120, 220, 330, 430, 530, 630, 730) et l'autre partie d'extrémité liée à la partie d'extrémité de la seconde barre de renforcement (110, 210, 320, 420, 520, 620, 720) et espacée de la première partie d'extrémité, et ayant un ou plusieurs gradins avec une partie d'extrémité dans la direction axiale formant un angle quelconque choisi parmi un angle aigu, un angle droit et un angle obtus par rapport à la direction longitudinale ; et
une douille de fixation creuse (140, 240, 340, 450, 550, 650, 750) ouverte dans la direction longitudinale pour s'étendre dans la direction longitudinale afin d'entourer et de recevoir une surface externe du second élément d'extrémité de liaison (130, 230, 350, 440, 540, 640, 740) et une surface externe du premier élément d'extrémité de liaison (120, 220, 330, 430, 530, 630, 730), ayant une partie filetée femelle (141, 541, 641, 751) pour coupler la douille de fixation (140, 240, 340, 450, 550, 650, 750) qui est couplée de manière hélicoïdale à la partie filetée mâle (121, 731) pour coupler la douille de fixation (140, 240, 340, 450, 550, 650, 750) du premier élément d'extrémité de liaison (120, 220, 330, 430, 530, 630, 730) formée dans la direction longitudinale au niveau d'une surface interne de celle-ci, verrouillée sur le ou les différents gradins du second élément d'extrémité de liaison (130, 230, 350, 440, 540, 640, 740), et ayant un ou plusieurs gradins de verrouillage (142, 170) formant un angle quelconque choisi parmi un angle aigu, un angle droit et un angle obtus par rapport à la direction longitudinale,
la douille de fixation (140, 240, 340, 450, 550, 650, 750) étant déplacée vers l'avant vers le premier élément d'extrémité de liaison (120, 220, 330, 430, 530, 630, 730) et tournée dans une direction de serrage de vis de fixation de telle sorte que les gradins de verrouillage (142, 170) de la douille de fixation (140, 240, 340, 450, 550, 650, 750) sont solidement supportés par le second élément d'extrémité de liaison (130, 230, 350, 440, 540, 640, 740) pour permettre au premier élément d'extrémité de liaison (120, 220, 330, 430, 530, 630, 730) et au second élément d'extrémité de liaison (130, 230, 350, 440, 540, 640, 740) d'être fixés d'un seul tenant par la douille de fixation (140, 240, 340, 450, 550, 650, 750) afin d'assembler mécaniquement la première barre de renforcement (100, 200, 310, 410, 510, 610, 710) et la seconde barre de renforcement (110, 210, 320, 420, 620, 720),
une forme du premier élément d'extrémité de liaison (120, 220, 330, 430, 530, 630, 730) liée à la partie d'extrémité de la première barre de renforcement (100, 200, 310, 410, 510, 610, 710) étant une forme dans laquelle une partie d'extrémité a une forme de matériau en barre ayant une largeur égale ou similaire à celle de la première barre de renforcement (100, 200, 310, 410, 510, 610, 710) et une surface de section transversale formée selon une forme circulaire afin d'avoir une structure assemblée à la première barre de renforcement (100, 200, 310, 410, 510, 610, 710) et l'autre partie d'extrémité a une forme de matériau en barre ayant une largeur plus étendue que la forme de matériau en barre de la première partie d'extrémité et ayant la partie filetée mâle (121, 731) pour coupler la douille de fixation (140, 240, 340, 450, 550, 650, 750) formée au niveau de la surface externe étendue pour avoir une largeur qui est une somme d'une forme de matériau en barre étendue du second élément d'extrémité de liaison (130, 230, 350, 440, 540, 640, 740) et d'une hauteur d'un filetage de vis afin d'être une forme de matériau en barre étendue par la largeur qui est étagée à proximité de la partie d'extrémité dans la direction longitudinale,
une forme du second élément d'extrémité de liaison (130, 230, 350, 440, 540, 640, 740) liée à la partie d'extrémité de la seconde barre de renforcement (110, 210, 320, 420, 520, 620, 720) étant une forme dans laquelle une partie d'extrémité a une forme de matériau en barre ayant une largeur égale ou similaire à celle de la seconde barre de renforcement (110, 210, 320, 420, 520, 620, 720) et une surface de section transversale formée selon une forme circulaire afin d'avoir une structure assemblée à la seconde barre de renforcement (110, 210, 320, 420, 520, 620, 720) et l'autre partie d'extrémité étant une forme de matériau en barre ayant une largeur plus étendue que la forme de matériau en barre de la première partie d'extrémité mais étant formée avec une largeur plus petite qu'une surface interne de la douille de fixation (140, 240, 340, 450, 550, 650, 750) pour permettre à la douille de fixation (140, 240, 340, 450, 550, 650, 750) de se déplacer au niveau d'une surface externe et ayant un gradin (131, 171) sous la forme d'une bande saillante qui entoure la surface externe pour être étendue par la largeur qui est étagée à proximité du gradin (131, 171),
le gradin (131, 171) sous la forme d'une bande saillante se présentant sous la forme d'une bande saillante entourant à partir d'une partie à proximité de la forme de matériau en barre dans laquelle la largeur du second élément d'extrémité de liaison (130, 230, 350, 440, 540, 640, 740) est étendue jusqu'à une surface d'extrémité du second élément d'extrémité de liaison (130, 230, 350, 440, 540, 640, 740) ou forme une forme d'une bande saillante qui entoure la partie à proximité de la forme de matériau en barre dans laquelle la largeur du second élément d'extrémité de liaison (130, 230, 350, 440, 540, 640, 740) est étendue tout en ayant une largeur raccourcie,
la surface interne de la douille de fixation (140, 240, 340, 450, 550, 650, 750) étant une forme cylindrique ayant une circonférence de façon à être apte à tourner dans la direction de serrage de vis de fixation tout en ayant la direction longitudinale comme axe afin d'entourer la forme de matériau en barre dans laquelle la largeur du second élément d'extrémité de liaison (130, 230, 350, 440, 540, 640, 740) est étendue et être couplée de manière mobile à la surface externe du second élément d'extrémité de liaison (130, 230, 350, 440, 540, 640, 740), et
le gradin de verrouillage (142, 170) faisant saillie dans une direction centrale sous la forme d'une bande saillante étant inclus au niveau d'une partie d'extrémité opposée de la partie filetée femelle (141, 541, 641, 751) pour coupler la douille de fixation (140, 240, 340, 450, 550, 650, 750) de la surface interne de la douille de fixation (140, 240, 340, 450, 550, 650, 750) à verrouiller sur le ou les différents gradins du second élément d'extrémité de liaison (130, 230, 350, 440, 540, 640, 740), et la partie filetée femelle (141, 541, 641, 751) pour coupler la douille de fixation (140, 240, 340, 450, 550, 650, 750) étant formée au niveau d'une partie à proximité de la partie d'extrémité dans la direction de premier élément d'extrémité de liaison au niveau de la surface interne de la douille de fixation (140, 240, 340, 450, 550, 650, 750) de telle sorte que la douille de fixation (140, 240, 340, 450, 550, 650, 750) formée pour entourer la forme de matériau en barre dans laquelle la largeur du second élément d'extrémité de liaison (130, 230, 350, 440, 540, 640, 740) est étendue et la forme de matériau en barre dans laquelle la largeur du premier élément d'extrémité de liaison (120, 220, 330, 430, 530, 630, 730) est étendue, est fixée de manière hélicoïdale à la partie filetée mâle (121, 731) pour coupler la douille de fixation (140, 240, 340, 450, 550, 650, 750) de la forme de matériau en barre dans laquelle la largeur du premier élément d'extrémité de liaison (120, 220, 330, 430, 530, 630, 730) est étendue et le gradin de verrouillage (142, 170) et le gradin (131, 171) sous la forme de la bande saillante se supportent solidement l'un l'autre en même temps pour permettre à la partie d'extrémité de la forme de matériau en barre étendue du premier élément d'extrémité de liaison (120, 220, 330, 430, 530, 630, 730) au niveau de laquelle la partie filetée mâle (121, 731) pour coupler la douille de fixation (140, 240, 340, 450, 550, 650, 750) est formée et à la partie d'extrémité de la forme de matériau en barre étendue du second élément d'extrémité de liaison (130, 230, 350, 440, 540, 640, 740) d'être couplées d'un seul tenant tout en se supportant l'une l'autre et tout en étant tournées l'une vers l'autre,
**caractérisé par le fait que**
le raccord de barre de renforcement du type à fixation par douille comprend en outre un élément de liaison intermédiaire (250, 760),
dans lequel, lors de l'ajustement de la longueur de la première barre de renforcement (200, 710) et de la seconde barre de renforcement (210, 720), l'élément de liaison intermédiaire (250, 760) est interposé entre le premier élément d'extrémité de liaison (220, 730) et la première barre de renforcement (200, 710) ou l'élément de liaison intermédiaire (250, 760) est interposé entre le second élément d'extrémité de liaison (230, 740) et la seconde barre de renforcement (210, 720), et une liaison entre la première barre de renforcement (200, 710) et l'élément de liaison intermédiaire (250, 760), et une liaison entre la seconde barre de renforcement (210, 720) et l'élément de liaison intermédiaire (250, 760), sont réalisées par soudage.

2. Raccord de barre de renforcement du type à fixation par douille utilisant un élément d'extrémité de liaison selon la revendication 1, dans lequel l'élément de liaison intermédiaire (250) est apte à être installé dans n'importe quel boîtier choisi parmi :
un boîtier dans lequel l'élément de liaison intermédiaire (250) est interposé entre le premier élément d'extrémité de liaison (220) et la première barre de renforcement (200) de telle sorte qu'une partie d'extrémité de l'élément de liaison intermédiaire (250) est liée à la partie d'extrémité de la première barre de renforcement (200), une partie filetée mâle (251) pour coupler l'élément de liaison intermédiaire (250) est formée dans une section prédéterminée de la première partie d'extrémité à l'autre partie d'extrémité, une rainure de réception d'élément de liaison intermédiaire (221) qui reçoit l'élément de liaison intermédiaire (250) est formée au niveau d'une partie d'extrémité du premier élément d'extrémité de liaison (220) correspondant à l'élément de liaison intermédiaire (250), une partie filetée femelle (222) pour coupler l'élément de liaison intermédiaire (250) est formée au niveau d'une surface interne de la rainure de réception (221), un ou plusieurs corps d'écrou de verrouillage (260) ayant une forme en section transversale circulaire ou polygonale sont formés au niveau de l'élément de liaison intermédiaire (250) de telle sorte qu'une position de l'élément de liaison intermédiaire (250) peut être verrouillée, et la partie d'extrémité du premier élément d'extrémité de liaison (220) correspondant à l'élément de liaison intermédiaire (250) est formée comme dans un boîtier choisi parmi un boîtier dans lequel une surface de section transversale allant de la surface de partie d'extrémité jusqu'à une distance prédéterminée est formée selon une forme circulaire, un boîtier dans lequel la surface de section transversale est formée selon une forme polygonale, et un boîtier dans lequel une ou plusieurs paires de surfaces de prise tournées les unes vers les autres sont formées ; et
un boîtier dans lequel l'élément de liaison intermédiaire (250) est interposé entre le second élément d'extrémité de liaison (230) et la seconde barre de renforcement (210) de telle sorte que la première partie d'extrémité de l'élément de liaison intermédiaire (250) est liée à la partie d'extrémité de la seconde barre de renforcement (210), la partie filetée mâle (251) pour coupler l'élément de liaison intermédiaire (250) est formée dans une section prédéterminée de la première partie d'extrémité à l'autre partie d'extrémité, la rainure de réception d'élément de liaison intermédiaire (221) qui reçoit l'élément de liaison intermédiaire (250) est formée au niveau d'une partie d'extrémité du second élément d'extrémité de liaison (230) correspondant à l'élément de liaison intermédiaire (250), la partie filetée femelle (222) pour coupler l'élément de liaison intermédiaire (250) est formée au niveau de la surface interne de la rainure de réception (221), le ou les différents corps d'écrou de verrouillage (260) ayant une surface de section transversale formée selon une forme circulaire ou polygonale sont formés au niveau de l'élément de liaison intermédiaire (250) de telle sorte qu'une position de l'élément de liaison intermédiaire (250) peut être verrouillée, et la partie d'extrémité du second élément d'extrémité de liaison (230) correspondant à l'élément de liaison intermédiaire (250) est formée comme dans un boîtier choisi parmi un boîtier dans lequel une surface de section transversale allant de la surface de partie d'extrémité jusqu'à une distance prédéterminée est formée selon une forme circulaire, un boîtier dans lequel la surface de section transversale est formée selon une forme polygonale, et un boîtier dans lequel une ou plusieurs paires de surfaces de prise tournées les unes vers les autres sont formées.

3. Raccord de barre de renforcement du type à fixation par douille utilisant un élément d'extrémité de liaison selon la revendication 1, dans lequel l'élément de liaison intermédiaire (250) est apte à être installé dans chacun des boîtiers par :
l'élément de liaison intermédiaire (250) dans la direction de première barre de renforcement (200) ayant une partie d'extrémité liée à la partie d'extrémité de la première barre de renforcement (200), une partie filetée mâle (251) pour coupler l'élément de liaison intermédiaire (250) étant formée dans la section prédéterminée allant de la première partie d'extrémité à l'autre partie d'extrémité, une première rainure de réception d'élément de liaison intermédiaire (221) qui reçoit l'élément de liaison intermédiaire (250) étant formée au niveau de la partie d'extrémité du premier élément d'extrémité de liaison (220) correspondant à l'élément de liaison intermédiaire (250), une partie filetée femelle (222) pour coupler l'élément de liaison intermédiaire (250) étant formée au niveau d'une surface interne de la rainure de réception (221), un ou plusieurs corps d'écrou de verrouillage (260) ayant la surface de section transversale formée selon une forme circulaire ou polygonale étant disposés au niveau de l'élément de liaison intermédiaire (250) de telle sorte qu'une position de l'élément de liaison intermédiaire (250) peut être verrouillée, et la partie d'extrémité du premier élément d'extrémité de liaison (220) correspondant à l'élément de liaison intermédiaire (250) étant formée comme dans n'importe quel boîtier choisi parmi le boîtier dans lequel la surface de section transversale allant de la surface de partie d'extrémité jusqu'à une distance prédéterminée est formée selon la forme circulaire, le boîtier dans lequel la surface de section transversale est formé selon la forme polygonale, et le boîtier dans lequel la ou les paires de surfaces de prise tournées les unes vers les autres sont formées ; et
l'élément de liaison intermédiaire (250) dans la direction de seconde barre de renforcement ayant une partie d'extrémité liée à la partie d'extrémité de la seconde barre de renforcement (210), la partie filetée mâle (251) pour coupler l'élément de liaison intermédiaire (250) étant formée dans une section prédéterminée allant de la première partie d'extrémité à l'autre partie d'extrémité, une rainure de réception d'élément de liaison intermédiaire (221) qui reçoit l'élément de liaison intermédiaire (250) étant formée au niveau de la partie d'extrémité du second élément d'extrémité de liaison (230) correspondant à l'élément de liaison intermédiaire (250), la partie filetée femelle (222) pour coupler l'élément de liaison intermédiaire (250) étant formée au niveau de la surface interne de la rainure de réception (221), le ou les différents corps d'écrou de verrouillage (260) ayant une surface de section transversale formée selon une forme circulaire ou polygonale étant formés au niveau de l'élément de liaison intermédiaire (250) de telle sorte qu'une position de l'élément de liaison intermédiaire (250) peut être verrouillée, et la partie d'extrémité du second élément d'extrémité de liaison (230) correspondant à l'élément de liaison intermédiaire (250) étant formée comme dans un boîtier choisi parmi le boîtier dans lequel la surface de section transversale allant de la surface de partie d'extrémité jusqu'à une distance prédéterminée est formée selon la forme circulaire, le boîtier dans lequel la surface de section transversale est formée selon la forme polygonale, et le boîtier dans lequel la ou les paires de surfaces de prise tournées les unes vers les autres sont formées.

4. Raccord de barre de renforcement du type à fixation par douille utilisant un élément d'extrémité de liaison selon la revendication 1, la revendication 2 ou la revendication 3, dans lequel des formes de partie d'extrémité du premier élément d'extrémité de liaison (120, 220, 330, 430, 530, 630, 730) et du second élément d'extrémité de liaison (130, 230, 350, 440, 540, 640, 740) sont n'importe quelles formes choisies parmi :
une forme dans laquelle la forme de partie d'extrémité du premier élément d'extrémité de liaison (120, 220, 330, 430, 530, 630, 730) est une partie saillante formée dans la direction longitudinale et la forme de partie d'extrémité du second élément d'extrémité de liaison (130, 230, 350, 440, 540, 640, 740) est une unité de réception formée avec la même forme que la partie saillante pour avoir la partie saillante montée dans celle-ci ; et
une forme dans laquelle la forme de partie d'extrémité du second élément d'extrémité de liaison (130, 230, 350, 440, 540, 640, 740) est une partie saillante formée dans la direction longitudinale et la forme de partie d'extrémité du premier élément d'extrémité de liaison (120, 220, 330, 430, 530, 630, 730) est une unité de réception formée avec la même forme que la partie saillante pour avoir la partie saillante montée dans celle-ci, et
les formes de partie d'extrémité du premier élément d'extrémité de liaison (120, 220, 330, 430, 530, 630, 730) et du second élément d'extrémité de liaison (130, 230, 350, 440, 540, 640, 740) sont échangeables l'une avec l'autre.

5. Raccord de barre de renforcement du type à fixation par douille utilisant un élément d'extrémité de liaison selon la revendication 1, la revendication 2 ou la revendication 3, dans lequel les formes de partie d'extrémité du premier élément d'extrémité de liaison (120, 220, 330, 430, 530, 630, 730) et du second élément d'extrémité de liaison (130, 230, 350, 440, 540, 640, 740) sont n'importe quelles formes choisies parmi :
une forme dans laquelle la forme de partie d'extrémité du premier élément d'extrémité de liaison (120, 220, 330, 430, 530, 630, 730) est n'importe quelle forme choisie parmi un cône, un cône tronqué, un cône arrondi, un cylindre, une pyramide polygonale, une pyramide polygonale tronquée, une pyramide polygonale arrondie, une colonne polygonale, une forme sphérique coupée, et une forme elliptique-sphérique coupée, faisant saillie à partir du centre dans la direction longitudinale, et une surface plate et une surface en relief perpendiculaire à la direction longitudinale, et la forme de partie d'extrémité du second élément d'extrémité de liaison (130, 230, 350, 440, 540, 640, 740) est une unité de réception de la forme de partie d'extrémité du premier élément d'extrémité de liaison (120, 220, 330, 430, 530, 630, 730) qui est formée avec la même forme que la forme de partie d'extrémité du premier élément d'extrémité de liaison (120, 220, 330, 430, 530, 630, 730) ; et
une forme dans laquelle la forme de partie d'extrémité du second élément d'extrémité de liaison (130, 230, 350, 440, 540, 640, 740) est n'importe quelle forme choisie parmi un cône, un cône tronqué, un cône arrondi, un cylindre, une pyramide polygonale, une pyramide polygonale tronquée, une pyramide polygonale arrondie, une colonne polygonale, une forme sphérique coupée, et une forme elliptique-sphérique coupée, faisant saillie à partir du centre dans la direction longitudinale, et une surface plate (860) et une surface en relief perpendiculaire à la direction longitudinale, et la forme de partie d'extrémité du premier élément d'extrémité de liaison (120, 220, 330, 430, 530, 630, 730) est une unité de réception de la forme de partie d'extrémité du second élément d'extrémité de liaison (130, 230, 350, 440, 540, 640, 740) qui est formée avec la même forme que la forme de partie d'extrémité du second élément d'extrémité de liaison (130, 230, 350, 440, 540, 640, 740), et
les formes de partie d'extrémité du premier élément d'extrémité de liaison (120, 220, 330, 430, 530, 630, 730) et du second élément d'extrémité de liaison (130, 230, 350, 440, 540, 640, 740) sont échangeables l'une avec l'autre.

6. Raccord de barre de renforcement du type à fixation par douille utilisant un élément d'extrémité de liaison selon la revendication 1, la revendication 2 ou la revendication 3, dans lequel les formes de partie d'extrémité du premier élément d'extrémité de liaison (120, 220, 330, 430, 530, 630, 730) et du second élément d'extrémité de liaison (130, 230, 350, 440, 540, 640, 740) sont n'importe quelles formes choisies parmi :
une forme dans laquelle la forme de partie d'extrémité du premier élément d'extrémité de liaison (120, 220, 330, 430, 530, 630, 730) est une partie saillante du type incliné à multiples gradins, ayant une ou plusieurs sections dans lesquelles une aire de surface diminue progressivement et des sections dans lesquelles une aire de surface est constante dans la direction longitudinale, et la forme de partie d'extrémité du second élément d'extrémité de liaison (130, 230, 350, 440, 540, 640, 740) est une unité de réception formée selon une forme correspondant à la partie saillante ; et
une forme dans laquelle la forme de partie d'extrémité du second élément d'extrémité de liaison (130, 230, 350, 440, 540, 640, 740) est une partie saillante du type incliné à multiples gradins, ayant une ou plusieurs sections dans lesquelles une aire de surface diminue progressivement et des sections dans lesquelles une aire de surface est constante dans la direction longitudinale, et la forme de partie d'extrémité du premier élément d'extrémité de liaison (120, 220, 330, 430, 530, 630, 730) est une unité de réception formée selon une forme correspondant à la partie saillante, et
les formes de partie d'extrémité du premier élément d'extrémité de liaison (120, 220, 330, 430, 530, 630, 730) et du second élément d'extrémité de liaison (130, 230, 350, 440, 540, 640, 740) sont échangeables l'une avec l'autre.

7. Raccord de barre de renforcement du type à fixation par douille utilisant un élément d'extrémité de liaison selon la revendication 5, dans lequel la surface en relief est formée de :
une partie convexe ayant un ou plusieurs éléments quelconques choisis parmi une surface de section longitudinale formée selon une forme triangulaire, une forme triangulaire avec un sommet arrondi, une forme quadrangulaire avec un angle de bord arrondi, une forme sphérique coupée, une forme elliptique-sphérique coupée, une forme de croix formée au niveau d'une surface de partie d'extrémité, une forme dans laquelle une forme de croix et une forme circulaire sont combinées, et une forme ondulée incurvée selon une forme de vague, tous ceux-ci étant équidistants du centre de la surface de partie d'extrémité ; et
une partie concave formée selon une forme recevant la partie convexe.

8. Raccord de barre de renforcement du type à fixation par douille utilisant un élément d'extrémité de liaison selon la revendication 5,
dans lequel une section longitudinale de n'importe laquelle choisie parmi les formes de partie d'extrémité du premier élément d'extrémité de liaison (120, 220, 330, 430, 530, 630, 730) et du second élément d'extrémité de liaison (130, 230, 350, 440, 540, 640, 740) formant un cône, un cône tronqué, un cône arrondi, un cylindre, une pyramide polygonale, une pyramide polygonale tronquée, une pyramide polygonale arrondie, une colonne polygonale, une forme sphérique coupée, et une forme elliptique-sphérique coupée, est formée pour former de multiples gradins ; et
un angle formé par les multiples gradins est n'importe quel angle choisi parmi un angle aigu, un angle droit et un angle obtus.

9. Raccord de barre de renforcement du type à fixation par douille utilisant un élément d'extrémité de liaison selon la revendication 1, la revendication 2 ou la revendication 3,
dans lequel les gradins de verrouillage (142, 170) et les gradins (131, 171) sont prévus en pluralité et formés en de multiples gradins pour répartir la contrainte provoquée par une force de traction concentrée sur la douille de fixation (140, 240, 340, 450, 550, 650, 750) ; et
un angle formé par les gradins de verrouillage (142, 170) et les gradins (131, 171) est n'importe quel angle choisi parmi un angle aigu, un angle droit et un angle obtus.

10. Raccord de barre de renforcement du type à fixation par douille utilisant un élément d'extrémité de liaison selon la revendication 1, la revendication 2 ou la revendication 3, dans lequel les tailles de la première barre de renforcement (100, 200, 310, 410, 510, 610, 710) et de la seconde barre de renforcement (110, 210, 320, 420, 520, 620, 720) sont différentes.

11. Raccord de barre de renforcement du type à fixation par douille utilisant un élément d'extrémité de liaison selon la revendication 1, la revendication 2 ou la revendication 3, dans lequel l'assemblage de matériaux en barre adjacents ayant des parties d'extrémité se faisant face l'une l'autre est possible par n'importe quel boîtier choisi parmi :
un boîtier dans lequel le premier élément d'extrémité de liaison (120, 220, 330, 430, 530, 630, 730) et le second élément d'extrémité de liaison (130, 230, 350, 440, 540, 640, 740) sont liés respectivement aux parties d'extrémité des matériaux en barre ;
un boîtier dans lequel le premier élément d'extrémité de liaison (120, 220, 330, 430, 530, 630, 730) et l'élément de liaison intermédiaire (250, 760) sont liés respectivement à un côté et à l'autre côté des parties d'extrémité des matériaux en barre ; et
un boîtier dans lequel le second élément d'extrémité de liaison (130, 230, 350, 440, 540, 640, 740) et l'élément de liaison intermédiaire (250, 760) sont liés respectivement à un côté et à l'autre côté des parties d'extrémité des matériaux en barre.

12. Raccord de barre de renforcement du type à fixation par douille utilisant un élément d'extrémité de liaison selon la revendication 1, dans lequel la liaison entre la première barre de renforcement (200, 710) et le premier élément d'extrémité de liaison (220, 730), la liaison entre la seconde barre de renforcement (210, 720) et le second élément d'extrémité de liaison (230, 740), la liaison entre la première barre de renforcement (200, 710) et l'élément de liaison intermédiaire (250, 760), et la liaison entre la seconde barre de renforcement (210, 720) et l'élément de liaison intermédiaire (250, 760), sont réalisées par n'importe lequel choisi parmi un soudage par friction, un soudage par friction linéaire, un procédé de soudage à l'arc des goujons, un soudage bout à bout, un soudage par ultrasons, un soudage par résistance, un soudage au plasma, un soudage par bombardement électronique, un soudage par laser, un soudage par haute fréquence et un soudage à l'argon.
